# EUROPEAN PATENT SPECIFICATION

(11) **EP 2 612 519 B1**
(45) Date of publication and mention of the grant of the patent: **04.11.2015**
(21) Application number: 10751919.1
(22) Date of filing: 03.09.2010
(51) Int. Cl.: H04W 16/14, H04B 7/155, H04B 7/26, H04W 40/22, H04W 48/10, H04W 84/04, H04W 92/20

(54) **RELAY NODES IN MULTI-OPERATOR SCENARIO**
RELAISKNOTEN IN EINEM MEHRFACHBEDIENERSZENARIUM
NOEUDS RELAIS DANS UN SCÉNARIO À PLUSIEURS OPÉRATEURS

(43) Date of publication of application: 10.07.2013
(73) Proprietor: Nokia Solutions and Networks Oy, 02610 Espoo (FI)
(72) Inventor: YU, Ling, FI-90650 Oulu (FI); VAN PHAN, Vinh, FI-90100 Oulu (FI); HORNEMAN, Kari Veikko, FI-90800 Oulu (FI)
(74) Representative: Borgström, Markus
(86) International application number: PCT/EP2010/062945
(87) International publication number: WO 2012/028200

(56) References cited:
- US-A1- 2009 296 635
- US-A1- 2010 103 845
- US-A1- 2010 144 356

## Description

### FIELD

Exemplary and non-limiting embodiments of this invention generally relate to relays in communications networks.

### BACKGROUND

3rd Generation Partnership Project (3GPP) is standardizing an architecture that is known as long-term evolution (LTE) of the Universal Mobile Telecommunications System (UMTS) radio-access technology. The aim is to achieve, inter alia, reduced latency, higher user data rates, improved system capacity and coverage, and reduced cost for the operator. A further development of the LTE is herein referred to as LTE-Advanced. The LTE-Advanced aims to provide further enhanced services by means of even higher data rates and lower latency with reduced cost. The various development stages of the 3GPP LTE specifications are referred to as releases.

Since the new spectrum bands for international mobile telecommunications (IMT) contain higher frequency bands and LTE-Advanced is aiming at a higher data rate, a coverage of one Node B (base station) may be limited owing to high propagation loss and limited energy per bit.

Relaying has been proposed as a possibility to enhance the coverage. Apart from this goal of coverage extension, introducing relay concepts may also help in providing a high-bitrate coverage in a high shadowing environment, reducing an average radio-transmission power at User Equipment (UE). This may lead to long battery life, enhanced cell capacity and effective throughput, e.g. increasing cell-edge capacity, balancing cell load, enhancing overall performance, and reducing deployment costs of radio access networks (RAN). The relaying would be provided by entities referred to as Relay stations (RSs) or Relay Nodes (RNs). The relay nodes can be fixed or mobile, for example mounted to a high-speed train. In some systems the relay stations may be opportunistically available user equipment / mobile terminals that are not owned by the network itself.

When relay nodes are used to extending the coverage of base stations, variations in the traffic within the service area of base stations also affect the traffic load experienced at the relay nodes. These variations may originate e.g. from different traffic patterns of day and night traffic or from public events, such as concerts or soccer games, that may cause high traffic peaks.

In different deployment scenarios of relay nodes, the number of relay nodes needed to serve the offered traffic may be high or low depending on characteristics of local service area and capabilities of each relay node and cells thereof. For example, when relay nodes are deployed in a populated passenger train to provide enhanced cellular coverage for mobile users on board, one or several relay nodes may be used for each car of the train.

However, from an operator's point of view it would be desirable to keep the traffic load per relay node high to enable the deployed relay nodes to be well-utilized, and to minimize costs and work related to deployment and maintenance of relay nodes.

US 2009/296635A1 relates to a coordinates cell system which may consist of a group of coordinated base stations that may have the capability to communicate with each other as well as with relevant macro cell base stations via wireless interfaces.

### SUMMARY

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

Various embodiments comprise one or more methods, one or more apparatuses, one or more computer program products, one or more computer readable media, one or more articles of manufacture and one or more systems as defined in the independent claims. Further embodiments are disclosed in the dependent claims.

According to first a aspect, there is provided a method for a network node comprising connecting to a group of interconnected wireless relay nodes, the group comprising of a first set of wireless relay nodes connected to a first network over a first wireless connection, and a second set of wireless relay nodes connected to a second network over a second wireless connection configuring at least one of the first and the second sets of wireless relay nodes with resources for both the first and the second network for providing a user equipment of the second network with wireless access via said first set of wireless relay nodes to the interconnected second set of wireless relay nodes and further over the second wireless connection to the second network.

In further embodiments of a method according to the first aspect,
- the method may further comprise providing user equipment of the first network with wireless access via said first set of wireless relay nodes over the first wireless connection to the first network,
- the method may further comprise configuring both the first and the second set of wireless relay nodes with resources for both the first and the second network,
- the method may further comprise providing wireless access to user equipment of the first network via said second set of wireless relay nodes to the interconnected first set of wireless relay nodes and further over the first wireless connection to the first network,
- the group of interconnected wireless relay nodes may comprise a third set of wireless relay nodes connected to a third network over a third wireless connection, and wireless access to each network is provided via said sets of wireless relay nodes over the wireless connection to said each network,
- the method may further comprise relaying connections of the user equipment and each network via the sets of wireless relay nodes over the wireless connection to said each network,
- the first and the second sets of wireless relay nodes may comprise at least one wireless relay node common to both sets,
- the method may further comprise allocating resources of both the first and the second network to the at least one of the first and the second sets of wireless relay nodes,
- the resources may comprise resources of at least one of a first and a second operator, and said resources are configured as resources shared among the first and the second networks,
- the resources may comprise resources of the at least one of the first and the second operators, and said resources are configured as resources dedicated to the said one of the first and the second networks,
- the group of interconnected wireless relay nodes may comprise a co-operative group of interconnected relay nodes sharing information comprising one or more of: allocated resources, channel condition, connected networks, connected user equipment, number of user equipment per operator, capability information,
- the method may further comprise receiving said information on at least one relay node of the group, selecting a wireless relay node to provide access, and connecting, on the basis of the received information, the user equipment of the first and the second network to a network via the sets of radio relay nodes of the group of interconnected wireless relay nodes,
- the resources may comprise one or more from a group comprising: frequency, frequency band, code, time slot, antenna, an identity of RN, identity of a group of RNs, network identifier, cell identifier and combination of two or more of the previous,
- a network may comprise an LTE-A communications network.

According to a second aspect, there is provided a method for a relay node wherein the relay node is part of a first set of wireless relay nodes of a group of interconnected wireless relay nodes, said group comprising the first set of wireless relay nodes connected to a first network over a first wireless connection, and a second set of wireless relay nodes connected to a second network over a second wireless connection, the method further comprising connecting to a network node, receiving configuration data from the network node, configuring the relay node with resources for both the first and the second network and providing access of a user equipment to the second network via the relay node and the interconnected second set of wireless relay nodes.

In further embodiments of a method according to the second aspect,
- the method may further comprise storing a subscription, said subscription defining at least one identifier identifying a subscribed network,
- the method may further comprise receiving a plurality of identifiers comprising identifiers of both the first and the second network from the first set of wireless relay nodes,
- the method may further comprise transmitting a message to the first set of wireless relay nodes, said message indicating the received identifier corresponding to the identifier of the subscribed network,
- the message may be transmitted on resources of the subscribed network,
- the message may comprise the identifier of the subscribed network.

According to a third aspect, there is provided a network node comprising at least one processor and at least one memory including a computer program code, the at least one memory and the computer program code being configured to, with the at least one processor, cause the apparatus at least to connect to a group of interconnected wireless relay nodes, the group comprising of a first set of wireless relay nodes connected to a first network over a first wireless connection and a second set of wireless relay nodes connected to a second network over a second wireless connection, to configure at least one of the first and the second sets of wireless relay nodes with resources for both the first and the second network for providing a user equipment of the second network with wireless access via said first set of wireless relay nodes to the interconnected second set of wireless relay nodes and further over the second wireless connection to the second network.

According to a fourth aspect, there is provided a relay node comprising at least one processor and at least one memory including a computer program code, wherein the relay node is part of a first set of wireless relay nodes of a group of interconnected wireless relay nodes, said group comprising the first set of wireless relay nodes connected to a first network over a first wireless connection, and a second set of wireless relay nodes connected to a second network over a second wireless connection, the at least one memory and the computer program code being configured to, with the at least one processor, cause the apparatus at least to connect to a network node, to receive configuration data from the network node and to configure the relay node with resources for both the first and the second network and to provide access of a user equipment to the second network via the relay node and the interconnected second set of wireless relay nodes.

According to a fifth aspect, there is provided a network node comprising means for connecting to a group of interconnected wireless relay nodes, the group comprising of a first set of wireless relay nodes connected to a first network over a first wireless connection, and a second set of wireless relay nodes connected to a second network over a second wireless connection, means for configuring at least one of the first and the second sets of wireless relay nodes with resources for both the first and the second network for providing wireless access to a user equipment of the second network via said first set of wireless relay nodes to the interconnected second set of wireless relay nodes and further over the second wireless connection to the second network.

In further embodiments of a network node according to the third or the fifth aspect,
- the network node may provide user equipment of the first network with wireless access via said first set of wireless relay nodes over the first wireless connection to the first network,
- the network node may configure both the first and the second set of wireless relay nodes with resources for both the first and the second network,
- the network node may provide wireless access to user equipment of the first network via said second set of wireless relay nodes to the interconnected first set of wireless relay nodes and further over the first wireless connection to the first network,
- wherein the group of interconnected wireless relay nodes may comprise a third set of wireless relay nodes connected to a third network over a third wireless connection, and wireless access to each network is provided via said sets of wireless relay nodes over the wireless connection to said each network,
- the network node may relay connections of the user equipment and each network via the sets of wireless relay nodes over the wireless connection to said each network,
- wherein the first and the second sets of wireless relay nodes may comprise at least one wireless relay node common to both sets,
- the network node may allocate resources of both the first and the second network to the at least one of the first and the second sets of wireless relay nodes,
- wherein the resources may comprise resources of at least one of a first and the second operator and said resources are configured as resources shared among the first and the second networks,
- wherein the resources may comprise resources of the at least one of the first and the second operators and said resources are configured as resources dedicated to said one of the first and the second networks,
- wherein the group of interconnected wireless relay nodes may comprise a co-operative group of interconnected relay nodes sharing information comprising one or more of: allocated resources, channel condition of a connection, connected networks, connected user equipment, number of user equipment per operator, capability information,
- the network node may receive said information on at least one relay node of the group,
- the network node may select a wireless relay node to provide access,
- the network node may connect, on the basis of the received information, the user equipment of the first and the second network to a network via the sets of radio relay nodes of the group of interconnected wireless relay nodes,
- wherein the resources may comprise one or more from a group comprising: frequency, frequency band, code, time slot, antenna, an identity of RN, identity of a group of RNs, network identifier, cell identifier and combination of two or more of the previous,
- wherein a network may comprises an LTE-A communications network.
- wherein the network node may comprise at least one from a group comprising: base station, relay node, module, network controller.

According to a sixth aspect, there is provided a relay node wherein the relay is part of a first set of wireless relay nodes of a group of interconnected wireless relay nodes, said group comprising the first set of wireless relay nodes connected to a first network over a first wireless connection, and a second set of wireless relay nodes connected to a second network over a second wireless connection, the relay node comprising of a means for connecting to a network node, means for receiving configuration data from the network node, means for configuring the relay node with resources for both the first and the second network and means for providing access of a user equipment to the second network via the relay node and the interconnected second set of wireless relay nodes.

In further embodiments of a relay node according to the fourth or the sixth aspect,
- the relay node may store a subscription, said subscription defining at least one identifier identifying a subscribed network,
- the relay node may receive a plurality of identifiers comprising identifiers of both the first and the second network from the first set of wireless relay nodes,
- the relay node may transmit a message to the first set of wireless relay nodes, said message indicating the received identifier corresponding to the identifier of the subscribed network,
- wherein the message may be transmitted on resources of the subscribed network,
- wherein the message may comprise the identifier of the subscribed network,

According to seventh aspect there is provided a system comprising one or more network node according to one of the third or fifth aspects and one or more relay node of the fourth or sixth aspects.

According to an eighth aspect, there is provided a computer program comprising program code means adapted to perform a method according to the first or second aspect.

According to a ninth aspect, there is provided a computer readable medium comprising computer readable code for executing a computer process according to a method according to the first or second aspect.

According to a tenth aspect, there is provided a computer program product, comprising a computer usable medium having a computer readable program code embodied therein, said computer readable program code being adapted to be executed to implement a method according to a method according to the first or second aspect.

According to a eleventh aspect, there is provided an article of manufacture comprising a computer readable medium and embodying program instructions thereon executable by a computer operably coupled to a memory which, when executed by the computer, carries out the functions according to the first or second aspect.

According to a twelfth aspect, there is provided an article of manufacture comprising media comprising programming configured to cause a processing circuitry to perform processing according to the first or second aspect.

Some embodiments may provide improvements comprising allowing multiple operators to share the same relaying network to provide enhanced cellular services and/or coverage in a common area.

### BRIEF DESCRIPTION OF THE DRAWINGS

In the following, the invention will be described in greater detail by means of preferred embodiments with reference to the accompanying drawings, in which
Figure 1 illustrates an example of a system according to an embodiment;
Figure 2 illustrates a process according to an embodiment;
Figure 3 illustrates a process according to an embodiment;
Figure 4 illustrates an arrangement of relay nodes and associated operators;
Figure 5 illustrates transmission of identifiers of operators according to an embodiment;
Figure 6 illustrates signaling and functional steps associated with routing of traffic according to an embodiment; and Figure 7 illustrates an apparatus according to an embodiment.

### DESCRIPTION

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Exemplary embodiments are now described more fully with reference to the accompanying drawings, in which some, but not all, embodiments are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Like reference numerals refer to like elements throughout.

Embodiments are related to a smart coordinated and cooperative relay system with one or more simultaneous donor systems of multiple operators especially suitable for LTE-Advanced (LTE-A) and international telecommunication union (ITU) international mobile telecommunications advanced (IMT-A) standards, wherein flexible deployment of a number of relay nodes is utilized for providing enhanced cellular coverage inside large buildings, hot spots at cell edges, passenger trains or cruise ships, for instance. The donor systems may have a common or overlapping service area coverage.

The present embodiments provide a smart cooperative relay system in a multi-operator scenario, targeted for 3GPP LTE-A and ITU IMT-A cellular networks. This is based on the notion of having a close cooperative group of relay nodes (RN), which are being connected and relayed to the donor eNB(s) of multiple operators, to be interconnected and cooperated to serve the end users of the multiple operators in the same coverage area of the cooperative cell group (CCG). Potential use case scenarios include deployment of several RNs to provide enhanced multi-operator cellular coverage inside buildings, or on board of populated passenger trains, cruise ships, etc.

In some embodiments, a close co-operative cell group (CCG) of RNs may be characterized by spatial togetherness in deployment for providing an efficient cellular coverage extension to a particular common service area (e.g. in-door buildings, aboard passenger trains or cruise ships).

The CCG of interconnected RNs considered in the embodiments herein may enhance the overall serving capacity of RNs and the performance of an overall system employing the CCG of interconnected RNs.

Examples of use case scenarios of the embodiments include e.g. inter-city passenger trains that may have thousands of potential mobile users are aboard. Relay nodes may be deployed in every car of such trains and the relay nodes may be interconnected for smart cooperation so as to provide efficient cellular access to mobile users aboard which may have different operators, according to one or more embodiments described herein. Further examples include hotspots inside large office buildings, where thousands of potential mobile users may be around during opening hours.

In some embodiments each cellular system (e.g. eNB, donor eNB, MME, RNC or Serving Gateway) of an operator, that would like to utilize the RNs to provide the subscribers with better cellular services, may configure one or more RNs in a group of interconnected RNs of a plurality of operators to provide the subscribers to the operator with access. The group of interconnected RNs may be connected to one or more networks of the plurality of operators. In this way, efficient wireless backhaul link management may be achieved towards donor eNBs of multi-operators in a coordinated way.

In some embodiments, a network may be a network of an operator of a communications network used by the operator to provide the subscribers of the operator with services. The operator may have allocated resources including one or more frequencies, frequency bands, codes, time slots, antennas, a network identifier, a cell identifier, or a combination of two or more of the previous. The operator may use these allocated resources to provide its subscribers with access. Accordingly, each subscriber of the network may have a subscription of the operator to access the operator's network. In some embodiments, a donor system or a donor eNB may refer to a system whose resources are allocated to a RN. The donor system may be a network of an operator, for example. The RN may be for example a RN in a group of interconnected RNs. The RN may connect wirelessly to the donor system on a relay link or a wireless-backhaul connection provided by the donor system.

In some embodiments, a subscriber may refer to UE having a subscription to an operator's network. The UE may comprise a Subscriber Identity Module (SIM) issued by the operator to enable the UE to connect to the operator's network.

In some embodiments, a subscription may define one or more networks that may provide the owner of the subscription with services. The networks may be identified by network identifiers, e.g. Public Land Mobile Network Identifiers (PLMN_IDs). The subscription may be provided by an operator of a communications network on a Subscriber Identity Module (SIM) that may store the network identifiers.

In some embodiments, a network of an operator may be physically separate from a network of another operator by the operator's network comprising one or more nodes dedicated to the operator. The dedicated nodes may be used only by the single operator. A network of an operator may be logically separate from a network of another operator by the network being identifiable by an identifier. The identifier of an operator may comprise e.g. a Public Land Mobile Network (PLMN) identifier that identifies the operator from among other operators. Logically separate networks of operators may use the same infrastructure. Thus the infrastructure of each operator may comprise one or more nodes that are shared with other operators.

eNBs (Evolved NodeBs) according to the embodiments may provide Evolved Universal Terrestrial Radio Access Network (E-UTRAN) features such as user plane Radio Link Control/Medium Access Control/Physical layer protocol (RLC/MAC/PHY) and control plane Radio Resource Control (RRC) protocol terminations towards the UE.

The following exemplary embodiments are applicable to any cellular system, network infrastructure, access node, eNB, home NodeB, relay node, server, MME, RNC, Serving Gateway corresponding component, and/or to any communications system or any combination of different communications systems that provides subscribers to an operator with access by using a node, infrastructure or equipment of another operator. The communications system may be a fixed communications system or a wireless communications system or a communications system utilizing both fixed networks and wireless communications means. The protocols used, the specifications of communications systems, servers and user terminals, UE, especially in wireless communications, develop rapidly. Such development may require extra changes to an embodiment. Therefore, all words and expressions should be interpreted broadly and they are intended to illustrate, not to restrict, the embodiment. Examples of communications systems whereto the embodiments may be applied may include communications standards or technologies including but not limited to: TETRA (Terrestrial Trunked Radio), LTE (Long Term Evolution), LTE-Advanced (LTE-A), GSM (Global System for Mobile Communications), WCDMA (Wideband Code Division Multiple Access), WLAN (Wireless Local Area Net-work), WiMAX (Worldwide Interoperability for Microwave Access) or Blue-tooth® standard, or any other suitable standard/non-standard wireless communication means. Wired connections in a communication system 100 may be implemented for example using Asynchronous Transfer mode (ATM), Ethernet, E1 or T1 lines.

In the following exemplary embodiments, the communications standards or technologies of each operator may be the same or they may be different.

In the following exemplary embodiments, resources defined and/or allocated may refer to resources used to communicate between devices, e.g. eNB and RN, or eNB and UE, or RN and UE, for example. These resources may be used for receiving and or transmitting associated data. The data may be associated with accessing a network and/or a connection to a network.

In some embodiments, a backhaul encompasses a transport network between cell sites (base stations) and associated controller, gateway sites or base stations. The cell sites may be numerous, often geographically remote and with a limited bandwidth.

In the following, different exemplary embodiments will be described using as an example of an access architecture to which the embodiments may be applied, a radio access architecture based on LTE Advanced, LTE-A, that is based on orthogonal frequency multiplexed access (OFDMA) in a downlink and a single-carrier frequency-division multiple access (SC-FDMA) in an uplink, without restricting the embodiments to such an architecture, however. It is obvious to a person skilled in the art that the embodiments may also be applied to other kinds of communications networks having suitable means by adjusting parameters and procedures appropriately.

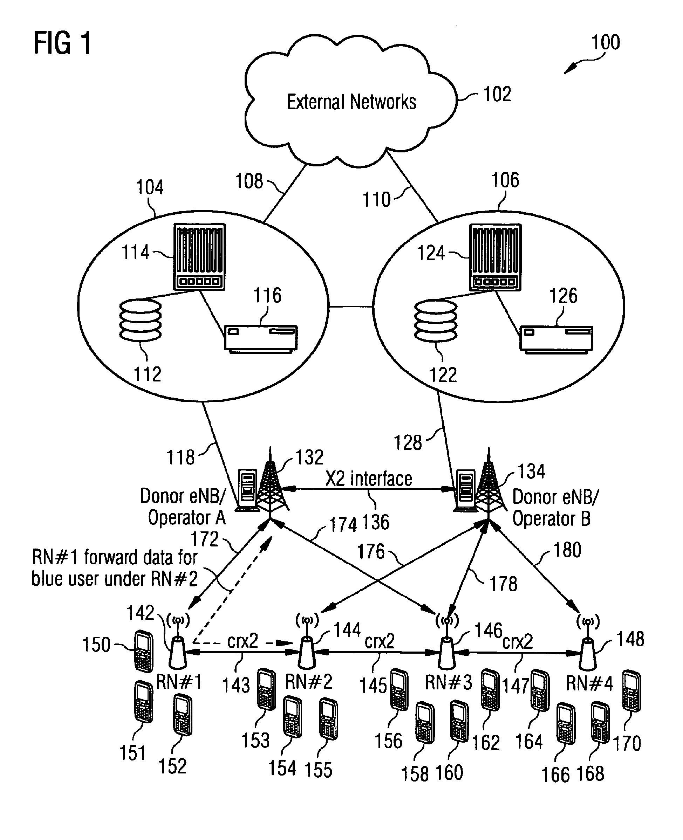

A general architecture of a communication system employing relays is illustrated in Figure 1. Figure 1 is a simplified view of a system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures.

Figure 1 illustrates an LTE-A network 100 employing relays according to an embodiment of the invention. The network may be operated by a plurality of network operators. In Figure 1, an example with networks of two operators A and B is described. In the example, both operators provide their subscribers with access via an access network. The access network may be a wireless access network through which UE 150 to 170 may wirelessly access the operator's network. In some embodiments, the access network may provide the UE with wired access.

In Figure 1, the access network of an operator A comprises a node 132 and the access network of an operator B comprises a node 134. The node 132 may provide UE subscribing to the operator A with access and the node 134 may provide UE subscribing to the operator B with access. The node 132 and 134 may be e.g. eNB. The eNBs of the operator A and the eNB of the operator B may be connected 136 by an X2 interface, for example. The X2 may comprise a capability to communicate data and/or signalling between eNBs. Accordingly, the X2 may be used in user and/or control plane. A connection between the eNBs may be used for example for sharing information among the eNBs. One or more tunnels, e.g. using General Packet Radio Service Tunnelling Protocol (GTP), may be established between the eNBs to carry user plane data.

The different UE 150 to 170 that has subscribed to the operator A may access the operator's A network through the access provided by the eNB 132, and the UE that has subscribed to the operator B may access the operator's B network through the access provided by the eNB 134. The access may be provided to the UE when it is located within the coverage area of the eNB. The access may be wireless access provided, e.g. by means of radio frequency communications between the eNB and the UE. The radio frequencies may comprise radio frequencies allocated to the eNB from the radio frequencies available to the operator. The operator's radio frequencies may comprise frequencies licensed to the operator by competent authorities, for example. The coverage area may be defined by a range of wireless transmissions, for example. By accessing an operator's network the UE may gain access to networks 108 and services that are external to the operator's network. An example of external networks comprises the Internet.

An example of an access procedure between an eNB and UE which may be applied to some embodiments comprises a random access procedure. The accessing may comprise receiving at the eNB a request to access from the UE. In response to the access request, the eNB may allocate a Cell Radio Network Temporary Identifier (C-RNTI) to the UE. Once the C-RNTI identifying the UE has been successfully allocated, the UE may be scheduled for transmissions at the eNB. Thus, the UE may be connected to the operator's network by the access procedure.

In some embodiments, a connection between the UE and the eNB comprises a wireless connection. The connection may be a connection according to the LTE-A. The connection may be established after the UE has accessed the operator's network. The wireless connection between the UE and the eNB may comprise a wireless radio connection. Such a wireless radio connection may be provided by radio frequency communications of messages between the UE and the eNB. The messages may comprise data and/or signalling, e.g. user plane data and/or control plane data.

In the example of Figure 1, a plurality of RNs 142 to 148 may be connected to each eNB. The RNs may be used for extending the coverage areas of the eNB. A RN may relay access and connections between the eNB and the UE.

In Figure 1, the RNs 142, and 146 connect to the eNB of the operator A, and the RNs 144, 146, and 148 connect to the eNB of the operator B. Accordingly, the RNs may have sets of RNs connecting to different networks. The connections of each of the RNs to the eNB may be wireless connections. In an embodiment, the RN may access and connect to the eNB in a manner similar to that explained above in connection with the UE. Accordingly, in an embodiment, a RN may be implemented as UE that comprises necessary extensions for relaying traffic, such as additional communication means and/or processing capacity.

In an embodiment, a RN may be a wireless RN that wirelessly connects to an eNB and UE, and relays data and/or signalling between the UE and the eNB on the wireless connections. A wireless RN employing radio frequencies on the wireless connection may be referred to as a radio RN.

In the example of Figure 1, the RNs may connect 172, 174, 176, 178, and 180 to the eNBs and provide relaying between the eNB and UE. Accordingly, the UE in Figure 1 may access the networks of the operators A and B via the RNs. Following the access to the operator's network, a connection between the UE and the operator's network may be established via the RN.

In some embodiments, the UE may be provided with access via a plurality of RNs. This is illustrated in Figure 1, where e.g. the UE 155 may be provided with access to the operator's A network via the RN 144 connecting 143 to the RN 142 and over a connection 172 between the RN 142 and the operator's eNB 132. It should be appreciated that the RN 142 and 144 may not be directly connected but there may be one or more RNs that provide relaying between them and which may be connected to one or more operators' networks. In this way, the UE may be provided with access when the RN directly connecting to the UE and the RN that connects to the network of the operator of the UE are different.

In an embodiment, the RNs may be connected to each other 143, 145, 147 so as to form a group or a cluster of RNs. Each RN may be connected to one or more RNs. In this way, data may be relayed between two RNs on a direct connection between the RNs and/or via a third RN relaying data between the two RNs. Accordingly, the RNs may be interconnected and form a group of cooperative RNs. A connection between RNs may be implemented as a crx2 interface, for example. The crx2 may comprise a capability to communicate data and/or signalling between RNs. Accordingly, the cxr2 may be used in user and/or control plane.

In an embodiment, relaying towards UE, i.e. in a downlink direction, may comprise receiving one or more messages from the eNB on a connection between the RN and the eNB and transmitting at least some of the received messages on another connection towards the UE. The connection towards the UE may comprise a connection to another RN or a direct connection to the UE. One or more messages may be relayed in a similar manner towards the eNB in an uplink direction from the UE. The relaying may comprise decoding one or more of the received messages and re-assembling the decoded messages into one or more new messages to be transmitted.

In an embodiment, the group of relay nodes in Figure 1 forms a close cooperative cell group (CCG). A close cooperative group may be assigned a unique identifier. For example, the group may be addressed with a unique group radio network temporary identity (RNTI) common to all members of the group. Thus, an individual member can be configured with an individual RNTI and a group RNTI. The group RNTI can then be used for common control and data forwarding purposes by the eNB and/or the RN where the individual RNTI can be used within the group.

In an embodiment, a wireless access and/or connection to UE of the operator A and/or B may be provided via a plurality of interconnected RNs. The interconnected RNs may be connected to the operator's A network (RNs 142 and 146), to the operator's B network (RNs 144, 146 and 148) or to both operators' A and B networks (RN 146).

In an embodiment, a RN may access and/or connect to the operator's network and one or more other RNs using the same technology or a different technology. When different technologies are used in connections, interference between the connections may be kept low. For example, the LTE-A may be used for communications on a connection between the operator's network and a RN and WLAN e.g. defined in the family of IEEE 802.11 standards may be used for communications on connections with the other RNs over an crX2 interface. In another example, a RN may connect to one or more other RNs on a wired connection over an crX2 interface. The wired connections may comprise an Ethernet, an optical Ethernet or a Digital Subscriber Line (DSL) connection, for example. These connection methods may be readily available in place of deploying the RN, for example inside an office building.

In an embodiment, the network of the operator A may comprise a core network 104 and the network of the operator B may comprise a core network 106. The core networks of the operators may comprise network nodes with similar functions, structure and/or names. In the following, the network nodes of operators the A and B are explained with reference to network nodes that may have a similar function and/or name in each operator's network. It should be appreciated that the actual network nodes and their implementation may however be different between operators, and the networks of the operators may be logically of or physically separate.

The core network of each operator A and B may comprise one or more of a Mobility Management Entity (MME) 114, 124 a Home Subscription Server (HSS) 112, 122, a Gateway (GW) 116, 126 that may be interconnected. The GW may comprise for example a Serving Gateway (S-GW) and/or a Packet Data Network Gateway (P-GW), which may be combined into a single element or they may be separate.

The MME may track a location of connected UE 150 to 170 and control the S-GW to establish user plane data tunnels, e.g. using a General Packet Radio Service (GPRS) tunnelling protocol, towards the UE so as to enable user plane data delivery to and/or from the UE. The P-GW may provide mapping between (Internet Protocol) service flows of the UE in external networks and tunnels to the S-GW serving the UE.

The HSS 112 may store subscription data of the UE subscribing to the operator A. In a similar way, the HSS 122 may store subscription data of the UE subscribing to the operator B. When the UE of the operator A is located in the network of the operator A, the UE is in its home network. When the UE subscribing to the operator A is located in a network an operator other than A, e.g. B, the UE is in a visited network. The location of the UE may be stored in the HSS, e.g. in the level of MME serving the UE. For example, the UE of the operator A connected to the eNB 134 of the operator B is in the network of the operator B that is a visited network to the subscriber. The location of the UE may be stored in its home network HSS 112, e.g. as the address of MME 124 of the operator B that is serving the UE.

In the example of Figure 1, the core network of the operator A may connect 118 to one or more eNBs 132 of the operator A, and the core network of the operator B may connect 128 to one or more eNBs 134 of the operator B, so as to provide subscribers with access. The association between an operator's eNB and MME may be preconfigured in the eNB, e.g. the MME serving each eNB may be defined as a preconfigured Internet Protocol (IP) address in the eNB.

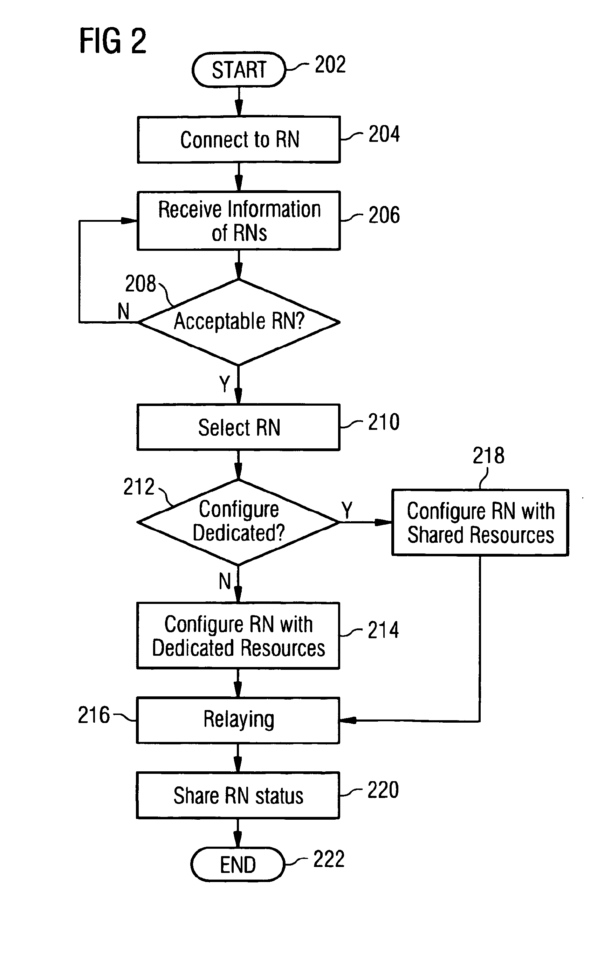

The connection 118, 128 between the core and access network of the operator may be implemented as an S1 interface, for example. The eNB of an access network may connect to one ore more network nodes in the operator's core network. For example, eNB 132, 134 and MME 114, 124 may implement an S1-MME interface to provide delivery of control plane data between the eNB and the MME, and eNB 132, 134 and S-GW 116, 126 in the core network may implement an S1-U interface to provide delivery of user plane data of the UE connected to the eNB. Figure 2 illustrates a process for employing a group of interconnected RNs to provide an operator's network with coverage extension. The RNs in the group may be connected to networks of different operators, but not every RN may have a direct connection to all the networks. In the process, resources to subscribers to multiple operators may be configured in a selected RN of the group. The one or more RNs referred to in the process may be RNs illustrated in Figure 1, for example. The multiple operators may comprise the operators A and B illustrated in Figure 1. The process may be performed by a network node of an operator. The network node may be e.g. a node controlling the resources used in the network, e.g. a centralized network controller, a Radio Network Controller, or an eNB. In the following, the process will be explained as performed by the eNB of operator A.

In 202, an eNB deployed and configured with resources of an operator A. The eNB may have been allocated resources by the operator A for providing access and/or for establishing connections to UE subscribing to the operator A. The eNB may have one or more connections to one or more eNBs of the operator A or of other operators.

In 204, the eNB connects to a RN.

In an embodiment, the RN comprises a RN in a group of interconnected RNs. The connecting to the RN may comprise the RN accessing the eNB. The accessing may comprise receiving a request for access from the RN at the eNB and the eNB allocating in response to the access a Cell Radio Network Temporary Identifier (C-RNTI). Once the C-RNTI identifying the RN has been successfully allocated to the RN, the RN may be scheduled at the eNB, it may thus be reached via the eNB. The allocated C-RTNI may be used for identifying also the group of RNs, or a separate identifier may be allocated to identify the group at the eNB. Thus, the RN and the group are connected to the eNB and are identifiable at the eNB.

In an embodiment the connected RN may be allocated resources of the operator A for providing subscribers of the operator A with access and/or connections. The resources may comprise resources allocated to the eNB and donated by the eNB to the RN.

In an embodiment where the RN comprises a RN in a group of interconnected RNs, once the eNB is connected to the RN, configuration of the group of RNs may be initiated for the operator A. The configuration may be initiated by the RN or the network of the operator, e.g. the eNB.

In an embodiment where the RN initiates the configuration, the configuration may be initiated once a connection between the RN and the operator's network has been established. This may be during the initial setup of the interconnected RNs, for example. The initiation of the configuration may comprise receiving a configuration request from one or more RNs in the group.

In 206, information on a status of one or more RNs in a group of interconnected RNs may be received via the connection at the RN established in 204. The information may comprise one or more from a group comprising: allocated resources, channel condition of a connection, connected networks, connected user equipment, number of user equipment per operator, capability information, and so forth. The information on RNs may be received in a single message or Information Elements (IEs) of a single message, or the information may be received in separate messages that are provided when an event occurs that introduces new information and/or changes the information. An identifier of each RN may be provided with each piece of information received so as to identify the RN associated with the information.

In an embodiment, the information may be received in response to the co-operation between the RNs in the group of interconnected RNs. The co-operation may comprise the RNs sharing the information on request, or in response to an event, for example. Accordingly, the group may be a co-operative group. The information may be shared on the connections among the RNs in the interconnected group. The sharing is explained in step 220 in more detail.

In an embodiment, the information may be received on the connections to one or more eNBs, or on the connection to the RN. In an embodiment, channel condition information may comprise information on received signal strength and/or quality measured by a RN from signals received from one or more eNBs. The channel condition information may comprise signal strength and/or quality of a received signal on a channel measured by a RN. The channel may be e.g. a frequency band used in a measured cell. Examples of channel condition information in the context of LTE comprise Reference signal Received Power (RSRP), Reference Signal Received Quality (RSRQ) and/or Received Signal Strength Indicator (RSSI).

In an embodiment information on connected networks may comprise identification information on each network to which a RN is connected. The identification information may comprise e.g. a PLMN identifier of the connected network. The PLMN identifier may be derived from a System Information data block received at the RN, for example. The RN may be connected to a network when it may be identified in the connected network, e.g. by a C-RNTI.

In an embodiment, the capability information may comprise a data processing capability of a RN, one or more data transmission and/or reception bit rates of RN, one or more frequency bands of operation of a RN or a duplexing capability of a RN, for example.

In an embodiment information, on allocated resources may comprise one or more frequencies, frequency bands, codes, time slots, antennas, identities of RNs, identifiers of a group of RNs, network identifiers, cell identifiers, or combinations of two or more thereof. The information on allocated resources may comprise information on allocated resources per each operator, when the RN has been configured with resources for more than one operator. The identities of a RN and/or a group may be assigned to the RN when a connection to the RN is established in step 204 of Figure 2, for example.

The connected user equipment per RN may be identified by the number of different pieces of UE and/or with an identifier of each different pieces of UE connected to the RN.

The number of user equipment per operator may be identified by operator identifiers associated with the number of UE.

In 208, it may be determined whether the received information identifies at least one RN that could be used by the operator A, to provide its subscribers with access and/or connections. This RN may be referred to as a candidate RN.

In an embodiment, an acceptable candidate RN may be determined from the information received in 206. The received information may be combined in various ways and compared against one or more thresholds to determine an acceptable candidate RN for extending the coverage area of the operator A. The following describes some examples of how the received information may be used for determining an acceptable RN.

In an embodiment, an acceptable candidate RN may be determined e.g. from the channel condition information received in 206. When the channel condition information from the candidate RN indicates a low signal strength and/or low quality, it may be determined that the network coverage is poor at the location of the candidate RN. Thus, to provide the subscribers with network coverage, the candidate RN indicating poor network coverage from nearby cells should be selected.

In an embodiment an acceptable candidate RN may be determined from a number of subscribers connected to the candidate RN. When the number of connected subscribers is less than a threshold value, it may be determined that the candidate RN may have capacity to relay a larger number of subscribers than the current number of subscribers connected. Thus, the candidate RN may be accepted.

In an embodiment, an acceptable candidate RN may be determined on the basis of networks connected to the RN. For example, when the candidate RN is connected to the network of the operator A, the candidate RN may be accepted. Since the candidate RN connects directly to the operator's eNB, a delay introduced by the candidate RN relaying traffic between subscribers to the operator and the eNB may be kept low.

In an embodiment, an acceptable candidate RN may be determined on the basis of the received information on resources allocated to the candidate RN. The candidate RN may be allocated resources from multiple operators. For example frequencies of an operator may be allocated as dedicated to the subscribers to the operator or as shared, so as to be shared among other operators, e.g. in a flexible spectrum usage way. Accordingly, depending on the already allocated resources, e.g. the spectrum at the candidate RN, the eNB may determine whether the candidate RN should be accepted. For example, if the resources of the operator A should be configured as dedicated and the same resources are already allocated at the candidate RN e.g. by another operator, the RN may not be accepted. However, if the resources of the operator A may be allocated as shared resources, the candidate RN may be selected by the eNB.

In an embodiment, an acceptable candidate RN may be determined on the basis of one or more capabilities of the candidate RN. For example, if the candidate RN cannot operate on some resources, e.g. the frequency band, the operator may determine that the RN is not acceptable.

In 210, the candidate RN determined as acceptable as explained above may be selected by the eNB.

In 212, it may be determined whether resources are configured to the selected RN as dedicated or shared towards subscribers to the operator A. When resources dedicated to the subscribers to the operator A are to be configured, the process proceeds to 214. If resources are to be configured as shared, the process proceeds to 218. It may be desirable to configure resources dedicated to the UE subscribing to the operator A when it is likely that traffic of other subscribers on the same resources would cause degradation of service quality to the subscribers to the operator A.

In an embodiment, in 214, the configuring comprises allocating resources of the operator A to the selected RN as dedicated resources. The resources may comprise all or part of operator A's resources, or all or part of the eNB's resources. When the resources are configured as dedicated, the selected RN may use allocated resources only to provide access and/ or connections to UE subscribed to the operator A. In 218, the selected RN is configured with shared resources for the subscribers to the operator A. Accordingly, the resources may be shared among multiple operators at the selected RN. In this way the selected RN may be able to serve more subscribers on the same resources and the traffic handling capacity of the RN may be more efficiently utilized.

In an embodiment, already allocated resources at the selected RN may be configured as shared resources. Accordingly, the selected RN may have resources allocated to subscribers to another operator, e.g. the operator B, and the already allocated resources may be configured as shared among A and B. Thus, the already allocated resources may be made available to the subscribers to the operator A. In this way, the resources of the operator B allocated to the selected RN may be configured to be available to both subscribers to A and B. Configuring already allocated resources to subscribers to multiple operators facilitates employing the RN by multiple operators when the operators use the same licensed resources. This may occur for example when the operators share a common radio access network.

In an embodiment, the configuring of resources to the selected RN comprises allocating resources of the operator A to the selected RN as shared resources. The resources may comprise all or some of the operator's A resources, or all or some of the eNB's resources. When the resources are allocated as shared, they may also be used by subscribers to operators (e.g. operator B) other than operator A. When the frequency band is allocated to the RN as shared, according to the embodiment, the selected RN may serve subscribers to multiple operators even if capability-wise it would be limited to operate only on a specific frequency band. Accordingly, the traffic handling capacity of such a RN may be efficiently utilized even if the RN could only communicate on a single frequency band.

In an embodiment, one part of resources may be configured as shared resources, as explained in step 218, and another part may be configured, as dedicated resources as explained in 214. For example, the selected RN may be allocated dedicated resources for connections of the subscribers to the operator A and the already allocated resources at the selected RN may be configured as shared to provide access to all operators, e.g. operators A and B.

In an embodiment, the shared resources may comprise only some of the resources configured to subscribers to the operator A at the selected RN. For example, only access resources or resources for connections of the subscribers may be configured as shared. In one example, access may be provided on shared resources at the selected RN and the network identifier, e.g. the PLMN identifier of the operator A may be configured to be transmitted by the selected RN on shared resources together with other network identifiers at the selected RN. Then dedicated resources may be configured for connections of the subscribers to the operator A. In this way, information on all the available networks of operators may be provided on e.g. the same frequency band at the RN. Since UE may find information on the available networks on the same frequency band, the time consumed in cell searching may be kept short. This may be reflected positively on handover execution times. Fast handover execution may be important in situations where a new cell should be found quickly, e.g. in trains moving with high speed, where network coverage may be suddenly lost.

In 214 and 218, the configuring may comprise transmitting a command to the selected RN. The command may comprise an indicator indicating the resources and an indication as to whether the resources should be configured as dedicated or shared for the selected RN. The resources may be indicated for example with an indicator comprising a number of a channel or a carrier defining one or more frequencies or a frequency band, for example. The command may further comprise an identifier of the operator, e.g. a PLMN identifier identifying the operator associated with the resources.

In an embodiment where at least a part of the resources are configured as shared and a part as dedicated, the configuring in 214 and 218 may comprise transmitting a command which may comprise an indicator indicating the resources and an indicator for each part of the resources as to whether the part should be configured as dedicated or shared for the selected RN. Each part of the configured resources may be indicated for example with an indicator comprising a number of a channel or a carrier defining one or more frequencies or a frequency band, for example.

In an embodiment, the configuring may comprise configuring the selected RN to transmit a network identifier of the operator on the allocated resources or outside the allocated resources, e.g. on the same frequency band as the allocated resources or outside the frequency band. An indication of where the network identifier should be transmitted by the selected RN may be included in the command or a configuration message may be transmitted to the selected RN to indicate this. The network indicator may comprise for example a PLMN identifier identifying the operator and/or the operator's network. The transmission of the network identifier may be used for providing subscribers with information about available networks. When the subscribers receive the network identifier, they obtain information on available networks to be used in accessing.

In an embodiment, in 214, a network identifier, e.g. the PLMN identifier of the operator, may be configured to be transmitted on the allocated resources of the operator. In this way, access may be provided to the subscribers to the operator on their usual frequency band and the UE searching for the operator's network may be avoided.

In an embodiment, in 218, a network identifier, e.g. the PLMN identifier of the operator, may be configured to be transmitted on other resources, e.g. outside the frequency band of the operator. Since the network identifier is transmitted outside the resources of the operator this may be used for indicating to the subscribers to the operator that the access is provided via RN and a separate tariff may be used for charging for transmitted and/or received traffic on a connection.

In 216, the selected RN is configured with resources for operator's A subscribers and the operator's A suscbribers may access and connect to the operator's A network via the interconnected group of RNs. Thus, traffic may be relayed between the UE and the operator's network via the selected RN to the group and further over the connection to the operator's A network established in 204.

In 220, the information on the selection of the RN may be shared. The information may be shared for example as information on one or more RNs received in 206, where the information was updated with the selection of the RN and configured resources, as described above. The sharing may comprise transmitting the information on the selection to one or more other eNBs and/or one or more RNs in the group of interconnected RNs.

In an embodiment, a crX2 interface in the control plane between the RNs or an X2 interface in the control plane between the eNBs in the close cooperative group may be used for exchanging the information.

In this way, routing of the access and connections of the UE via the interconnected group may be facilitated. In this, way the RN connecting to the UE subscribing to the operator A does not have to have a connection to the network of the operator A, but the access and connections may be routed via the group to the correct RN that connects to the operator's A network. Furthermore, the information sharing enables the eNB to be provided with information to be used in selecting RNs from the group.

In an embodiment where the selected RN is in a group of interconnected RNs, the information on the selection may be transmitted to the RNs in the group, for example as relayed by the selected RN. Accordingly, a decision about the selection of the RNs by each operator's donor eNB may be communicated among the involved donor eNBs over the X2 or S1 interface to facilitate the configuration of the corresponding backhaul links and the RNs. Accordingly, in an embodiment the donor eNBs of different operators may exchange the channel condition and user information under each RN over the X2 interface or S1 interface via a core network to coordinate the selection of the RNs for setup of wireless backhaul links. The above-described process enables a cellular system of an operator to select and configure one or more RNs in a cooperative group to set-up a wireless backhaul link towards to the donor eNBs of the operator. The selection can be based on e.g. the channel condition between the RNs and a different operator's donor eNB, the number of each operator's users connected to the RNs, etc. Depending on the spectrum used by each operator (e.g. whether an involved operator uses the dedicated spectrum or shares the same spectrum in a flexible spectrum usage way) and/or the capability of RNs, the same RN may be selected by multiple donor eNBs from a different operator to set-up the wireless backhaul link.

In 222, resources for subscribers to the operator A have been configured in the RN that may not have a direct connection to the operator's A network. The above process may be repeated to select more RNs to serve the subscribers to the operator A or when the information on one or more RNs in the group of interconnected RNs is updated. The process ends.

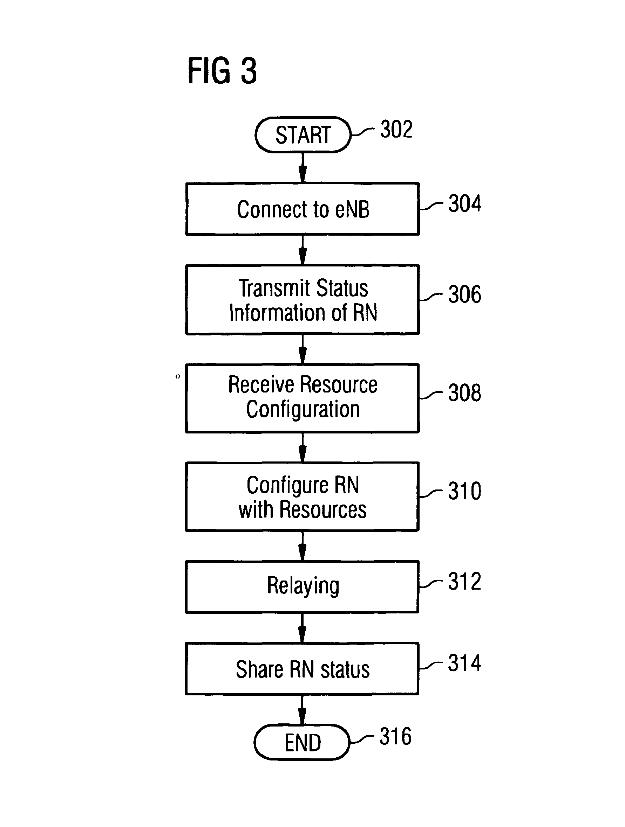

Figure 3 illustrates a process for configuring a RN of a group of interconnected RNs to provide an operator's network with coverage extension. The RNs in the group may be connected to networks of different operators, but every RN may not have a direct connection to all the networks. In the process, resources for subscribers to multiple operators may be configured in a selected RN of the group. The multiple operators may comprise the operators A and B illustrated in Figure 1. The selected RN may be a RN illustrated in Figure 1 and/or selected in the process of Figure 2, for example. In the following the process will be explained as performed by a RN selected by the operator A. The RN will be referred to with a terminology corresponding to the description of the process of Figure 2. Accordingly, the RN will be referred to as a candidate RN before being selected by the operator A, and after being selected by the operator A, the RN will be referred to as a selected RN.

In 302, the candidate RN may be within a coverage area of an eNB of the operator A and/or a RN of the group. Thus, the candidate RN may receive information on available networks by receiving transmissions from the eNB or the group comprising one or more network identifiers identifying available networks, e.g. the network of the operator A. The RN may be connected to the network of the operator B and be allocated with resources of the operator B to serve the operator's B subscribers.

In 304, the candidate RN connects to the network of the operator A. When the candidate RN is in the coverage area of the eNB, the candidate RN may connect to the operator's A network over a wireless connection. When in the coverage area of at least one RN of the group the candidate RN may connect to the operator's A network via the group and over a wireless connection via a RN of the group that connects to the operator's A network. The cooperative interface or connection (crX2) between RNs within the group can be a wireless or wired connection, as described above.

In an embodiment the candidate RN may access the eNB of the operator A in a manner similar to that of the UE. The accessing may comprise a procedure, e.g. a random access procedure. The access procedure may comprise transmitting a request for access to the eNB. The request may comprise a random access preamble, for example. In response to the request for access, the candidate RN may be assigned an identifier identifying the candidate RN to the eNB. The identifier may comprise a C-RNTI for example. Once the C-RNTI identifying the RN has been successfully allocated to the RN, the RN may be e.g. scheduled at the eNB, so it may be reached via the eNB. Thus, the RN is connected to the eNB.

In 306, the candidate RN may provide information on its status to other RNs in the group and/or to the network of the operator A. The contents of this status information are described above in connection with step 206 of the process of Figure 2.

In an embodiment, channel condition information may be provided by the candidate RN by performing measurements of one or more eNBs comprising receiving one or more signals from each measured eNB and measuring signal strength and/or quality therefrom. When the eNB comprises multiple cells, the candidate RN may perform measurement of received signals form one or more of the cells.

In an embodiment, identifier information on one or more networks connected to the candidate RN may be derived from the allocated identifiers identifying the candidate RN to the network, e.g. the C-RNTI as explained above.

In an embodiment, information on connected subscribers may be derived by the candidate RN from the relayed traffic at the candidate RN, e.g. from network identifiers and C-RNTI allocated to the UE. From the associated network identifiers and C-RNTIs the candidate RN may derive information on the number of subscribers per operator.

In an embodiment, the candidate RN capability information may be preconfigured at the candidate RN.

In an embodiment, the capability information on the candidate RN may be formed dynamically. For example, when a unit of the candidate RN breaks down, the broken unit may be removed from the capability information on the candidate RN. For example, when an antenna unit breaks down, a frequency band provided by the antenna may be removed from the operation frequency bands of the candidate RN.

In 308, the candidate RN may be selected by the operator A. The selecting may comprise receiving a configuration of resources to subscribers to the operator A. The configuration may comprise an allocation of resources of the operator A to the selected RN or a configuration of all or some of allocated resources at the selected RN as shared resources. The configuration may be received in a command, as is explained in steps 214 and 218 of Figure 2.

In 310, the RN may be configured with resources for subscribers to the operator A. The resources may be configured as dedicated resources as described in step 214 of Figure 2 or as shared resources as described in step 218 of Figure 2. In 310, the configuration may be received in a command from the eNB of the operator A, as explained in steps 214 and 218 in Figure 2. The configuration may configure already allocated resources at the selected RN or the configuration may allocate resources of the operator A to the selected RN.

In an embodiment, in 310, some resources may be configured as shared resources and other resources may be configured as dedicated resources as defined by the configuration command. In an embodiment, the resources may comprise access resources and resources for connections of the one or more subscribers to the operator A.

In an embodiment, the access resources may be configured as shared resources and the resources for the connections may be configured as dedicated resources, for example.

In an embodiment where access resources are configured as shared, the selected RN may be configured to provide access to subscribers to the operator A and also other subscribers on the same resources. The provision of access may comprise transmitting network identifiers of the operators on the resources to indicate available networks to the subscribers to the operators.

In an embodiment, the configuring in 310 may comprise configuring the selected RN to transmit a network identifier of the operator on the allocated resources or outside the allocated resources, e.g. on the same frequency band as the allocated resources or outside the frequency band. An indication of resources on which the network identifier should be transmitted by the selected RN may be included in the command received in 308.

In an embodiment, in 310, the network identifier of the operator may be configured to be transmitted on the allocated resources of the operator. In this way, access may be provided to the subscribers to the operator on their usual frequency band, and searching for the operator's network may be avoided.

In an embodiment, in 310, the network identifier of the operator may be configured to be transmitted on resources other than those allocated by the operator, e.g. outside the frequency band of the operator. Since the network identifier is transmitted outside the resources of the operator, this may be used for indicating to the subscribers to the operator that the access is provided via the selected RN and a separate tariff may be used for charging for transmitted and/or received traffic on a connection.

In an embodiment, the received configuration may indicate null resources. Then, already allocated resources at the selected RN may be configured for the operator that selected the RN.

In 312, the selected RN is configured with resources, and subscribers of the operator A may access and establish one or more connections to the operator's network. For example a connection may be established between the UE and the operator's A eNB. The connection may be a control plane connection or a user plane connection for example. Thus, traffic, e.g. control plane or user plane data may be relayed between the UE and the operator's network.

In 314, the information on the selection of the RN may be shared in a manner similar to that in step 220 in Figure 2. The shared information may be updated with information on the configured resources to the operator A at the selected RN. The process ends in 316. When the above process is used for selecting and configuring RNs in a group of cooperative RNs, the RNs in the group may serve the users of all the involved operators within the coverage area of the RN, no matter which operator's eNB the RN is connected to.

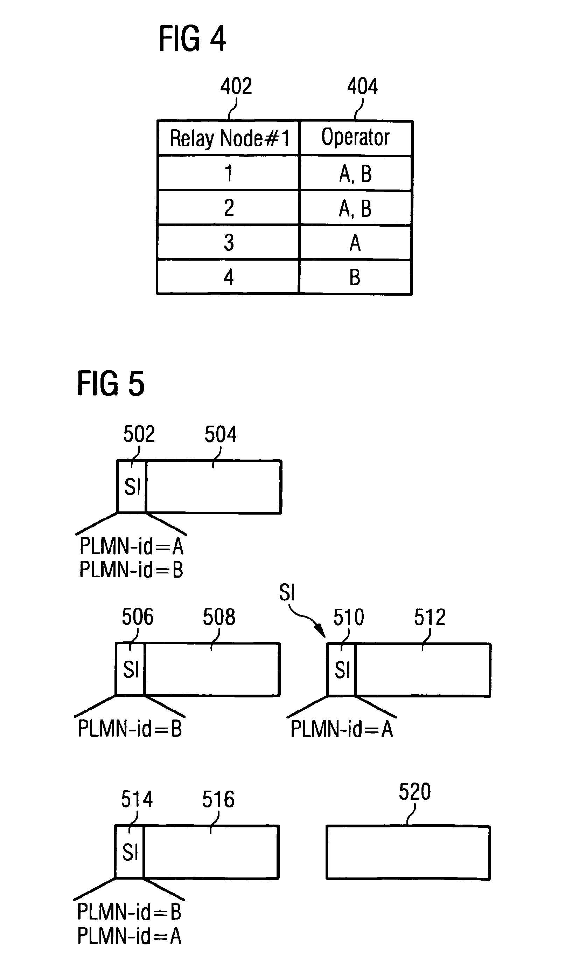

Figure 4 is a view of a data structure, illustrating a selection of RNs from a group or an RN by operators according to an embodiment. In the example each of the RNs numbered #1, #2, #3, #4 in the group have been arranged in a row column 402. Column 404 indicates one or more operators in each row that have selected the RN on the same row. Accordingly, the table shows that RNs #1 and #2 have been selected by the operators A and B. RN #3 has been selected by the operator A and RN #4 has been selected by the operator B. This exemplary data structure may illustrate the selection of RNs for example in the system of Figure 1 and the processes of Figures 2 and 3.

Let us consider the selection of RNs illustrated in Figure 4 in the context of Figure 1 with reference to both Figures 1 and 4. The operator A has selected RN #2 i.e. item 144. The process of Figure 2 describes an exemplary process the operator A may have used to select RN#2. RN#2 is not connected to the operator's A network directly, and thus the traffic of the UE subscribing to the operator A and being connected to the operator's A network via RN#2 may be relayed via RN#1 between the eNB of the operator A, i.e. the operator's A network, and the UE. Accordingly, the UE subscribing to the operator A may access the operator's A network via RN#2 to the group of interconnected RNs and further over the wireless connection 172 from RN#1 to the eNB 132 of the operator A. Following the access , the UE subscribing to the operator A may connect via RN#2 to the group of interconnected RNs and further over the wireless connection 172 from RN#1 to the eNB 132 of the operator A. Thus, a backhaul connection of RN#2 may be relayed via RN#1.

Since RN#2 is also selected by the operator B, for example as described above in connection with Figure 2, the access may be provided to the subscribers to the operator B via RN#2 over the wireless connection 176 from RN#2 to the eNB of the operator B. Following the access, the UE subscribing to the operator B may connect via RN#2 over the wireless connection 176 from RN#2 to the eNB of the operator B.

Accordingly, the access and connections of both subscribers to the operator A and the operator B may be relayed via the group of interconnected RNs towards the network of the operators.

In a manner similar to that of RN#2, RN#1 has been selected by both operators. Thus, both RN#1 and RN#2 have been configured with resources for subscribers to operators A and B, and the UE subscribing to the operator B may access the operator's B network via RN#1 to the group of interconnected RNs and further over the wireless connection 176 from RN#2 to the eNB 134 of the operator B.

It should be appreciated that the group of interconnected RNs may comprise one or more RNs connected to one or more networks other than A and B, and said one or more RNs may provide relaying of connections between the RNs selected by the operators A and B.

It should be appreciated that a RN selected e.g. in the process of Figure 2 may be selected by multiple operators and/or may be directly connected to multiple networks of operators. operators selecting the RN may not be operators of the networks the RN connects directly to.

It should be appreciated that in the embodiments, a RN of a group of interconnected RNs may not have a direct connection to each involved operator's network, but the RN may provide access and connections to subscribers to a plurality of operators when resources for the subscribers to the operators have been configured at the RN. By co-operation of the RNs in the group, the access and connections of the UE connected to the RN may be routed within the group towards RNs having a direct connection to the network the UE is subscribing to. Figure 5 illustrates transmission of identifiers of operators at a RN, according to an embodiment. Resources for multiple operators may be configured at the RN according to an embodiment described e.g. in Figures 2 and 3. In the example of Figure 5, resources for the operators A and B have been configured for the RN. In this example, identifiers of the operators A and B that have configured resources for their subscribers at the RN may be transmitted in a message comprising the identifiers of the operators A and B. The message may comprise a System Information (SI) block comprising one or more network identifiers, e.g. PLMN identifiers (PLMN-id). In this way, information may be provided to the UE about availability of the networks of the operators A and B. Thus, the subscribers may identify from the message whether a network according to their subscription is available at the RN.

In an embodiment, resources of one operator (operator A) configured for a RN may be shared in the RN by a plurality of operators. Item 504 illustrates resources, e.g. a frequency band of the operator A configured for the RN. The System Information (SI) block 502 that includes identifiers of the networks that provide access via the RN. Accordingly, when the resources of operator A have been configured for the RN as shared resources, the network identifiers of the operator A and other operators, e.g. the operator B, may be transmitted using the configured resources of the operator A. Thus, the resources configured e.g. by the operator A may be shared by the operators A and B.

In an embodiment, resources of different operators configured to a RN may be dedicated to each operator. As can be seen, a network identifier of operator A 506 is transmitted on resources 508 of the operator A that are separate from resources 512 of the operator B where a network identifier of the operator B 510 is transmitted. Accordingly, access is provided at the RN by using separate resources for the subscribers to operators A and B, and the traffic between the subscribers and the operator A uses the resources 508 that are separate from the resources 512 used for the traffic between the subscribers and the operator B. Thus, the connections between the operators and the UE use resources dedicated to each operator.

In an embodiment, the access resources of the operator A may be shared among other operators, e.g. the operator B, and the dedicated resources may be used in the RN for connections between the UE and each network. Accordingly, the network identifiers of the operators A and B may be transmitted in a shared SI block 516, and resources 516 may be dedicated to connections between the UE and the operator A and resources 520 may dedicated to connections between the UE and the operator B.

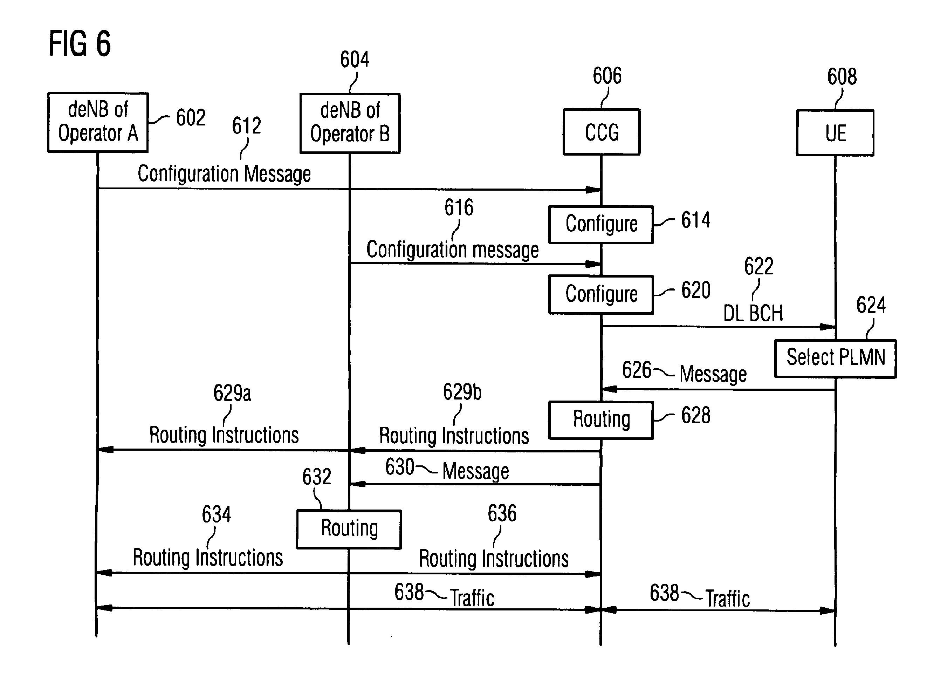

Figure 6 illustrates signaling and functional steps associated with routing of traffic between UE and a subscribed network via a group of interconnected RNs, according to an embodiment. The signaling of Figure 6 may be performed for example in the network of Figure 1. In the embodiment illustrated in Figure 6, a group of interconnected RNs 606 may be employed by the operators A and B to provide their subscribers with services. Accordingly, in Figure 6, the group of wireless RNs may be connected to the networks of the operators A and B. In the following, Figure 6 is now explained with references to Figures 2 and 3.

In Figure 6, a donor eNB (deNB) of the operator A 602 and a deNB of the operator B 604 may be connected to the group of interconnected wireless RNs 606, e.g. a CCG.

In an embodiment, the group of interconnected wireless RNs may comprise at least two sets, each of which comprises one or more RNs. One of the sets may connect to the deNB of the operator A and the other to the deNB of the operator B, in a manner similar to what was described in connection with Figure 1.

In 612, a message for configuring a wireless RN with resources to the operator A may be transmitted from the deNB of operator A to the wireless RN in the group of RNs 606. The message may comprise a configuration of resources to subscribers of the operator A. The configuring of the RN may be performed in a similar manner to what was described in Figure 2, e.g. with steps 214 or 218.

In 614, the configuration message from the deNB of the operator A may be relayed within the CCG to the wireless RN to be configured. Accordingly, it is not necessary to have a direct connection between the deNB of the operator A and the RN to deliver the configuration message to the RN. The configuration of the wireless RN may be performed as described in step 310 of Figure 3, for example.

In 616 the deNB of the operator B may configure a wireless RN of the CCG in a manner similar to that described in connection with the message 612 above. In 620, the configuration message 616 may be relayed to the wireless RN to be configured and the configuration of the wireless RN may be performed in a manner similar to that described in connection with step 614 above.

In an embodiment, in 612 to 620 the operators configure at least one RN in the CCG with resources to both operators. Thus, in 612 to 620 the same RN may be configured. However, it should be appreciated that the operators A and B may also configure one or more different RNs of the CCG in a manner described above. However, when the operators A and B configure different RNs, the different RNs may also be configured with resources for a third operator, e.g. operator C.

In a message 622, the configured RN of the CCG may transmit network identifiers of one or more available networks to the UE. The transmission of the network identifiers in 622 may be performed as described in step 310 of Figure 3, for example. In an embodiment, the RN may be configured with resources to both operators A and B, and the network identifiers of A and B may be transmitted in the message 622 to indicate availability of the networks of the operators.

In one embodiment, the network identifiers may be transmitted on a downlink Broadcast Channel (DL BCH) that comprises one or more System Information (SI) blocks as described in Figure 5.

The network identifiers 622 may be received by one or more different UE 608 within the coverage area of wireless transmissions from the RN.

In an embodiment, in 622, the network identifiers may be transmitted in a single message, e.g. a single SI block, as illustrated in items 502 and 514 of Figure 5, for example. Then, resources used in the transmission of the network identifiers 622 may be shared among the operators A and B.

In an embodiment, the network identifiers may be transmitted in separate messages 622, e.g. in separate SI blocks, as illustrated in items 506 and 510 of Figure 5, for example. Then, each network identifier may be transmitted on separate resources configured to the operator corresponding to the network identifier. Thus, the network identifier of the operator A may be transmitted on different resources than the network identifier of the operator B. The resources may be dedicated to each operator. Thus, allocated resources of an operator may be used for transmitting the network identifier of the operator. Since the allocated resources may be predetermined, the UE may know the resources where information on the availability of the network may be found. Therefore, the information about whether the network is available may be found quickly.

In 624, the UE may determine if the network identifiers 614 comprise any identifier that corresponds to a subscribed network of the UE. The determination may comprise deriving the network identifiers from the one or more messages 622 and comparing the derived identifiers with one or more identifiers of the subscribed networks. If a network identifier that corresponds to the subscribed network is determined, the UE may determine that the subscription of the UE allows accessing the network identified by the network identifier. Accordingly, the UE may select the network (local cell thereof), for example for establishing a connection. The network may be a home network of the UE or a visited network. The use of the visited network may be provided by roaming agreements between the operator of the subscriber and the operator of the visited network.

In one example, the UE 608 may be subscribing to the operator A. Then, in 624 the UE may determine if any of the network identifiers 622 correspond to the network of the operator A that is the subscribed network of the UE. Thus, the UE may determine whether the network identifiers 622 match the network identifier of the operator A. After in 614 and 620 resources to both operators A and B were configured at the RN, the network identifier of the operator A was transmitted in 622 to the UE. Therefore, in this example, the UE may determine in 624 that the network of the operator A is available, and select it for establishing a connection.

After selecting the network in 624, the UE may transmit a message 626 indicating the selected network to the RN. The message may comprise the network identifier of the selected network. Continuing with the example explained above in 624, where the UE 608 may be a subscriber to the operator A, the message 626 comprises the network identifier of operator A. In an embodiment, a message 626 may be transmitted on resources identifying the network selected in 624. The resources may comprise the dedicated resources used for transmitting the network identifier of the selected network, e.g. the operator's A network. Accordingly, the dedicated resources may comprise the resources of the subscribed network of the UE, i.e. the operator's A network. In this way, the resources used for transmitting the message 626 may be used for indicating the selected network of the UE.

In an embodiment, the message 626 may be a message associated with an access procedure, e.g. an RACH procedure.

In an embodiment, the message 626 may be a message associated with an establishment of a connection to an operator's network. In one example, the connection may comprise an RRC connection, and the message 626 may comprise an RRC connection establishment request that may include the network identifier that was selected in 624, e.g. the network identifier of the operator A.

In 628, routing of the message 626 received at the RN towards a correct network may be determined. This may comprise identifying the correct network for the message.

In an embodiment, in 628, it may be determined if the message 626 identifies a network. The network may be identified by the resources used for transmitting the message and/or a network identifier, as described above. If the message 626 identifies the network, the message may be routed towards the network connected to the CCG. When the RN has a direct connection to the network, the message may be routed directly to the network. Otherwise the RN may relay the message towards another RN of the CCG that is directly connected to the network. Accordingly, the message 626 may be routed within the CCG between a plurality of RNs.

In one example, the message 626 indicates the network of the operator A as the selected network to the RN. Then, routing instructions may be generated for the UE that is the originator of the message 626, so that the message 626 and further traffic may be routed between the UE and deNB of the operator A 602 via the CCG. The routing instructions may be shared among the CCG and/or among the networks connected to the CCG, as is illustrated by messages 629a and 629b. The routing instructions may identify the UE, the RN connecting to the UE, and the network serving the UE, for example.

In an embodiment, if the message 626 from the UE fails to identify a network, the RN may route the message 628 to the deNB 604 that is connected to the RN. Thus, the message may be routed to a default destination when the RN cannot route the received message from the UE. This is illustrated by the message 630 from the CCG to the deNB.

In one example, the deNB of the operator B may be directly connected to the RN determining the routing in 628, and the deNB of the operator B may be the default destination if the message cannot be routed in 628. When the message is routed 630 to the deNB 604, the network of the operator B may determine correct routing for the message from the UE.

In an embodiment, in 628, routing may be performed on the basis of co-operation between the RNs of the CCG and/or networks connected to the CCG. The co-operation may comprise sharing the information described in step 206 of Figure 2. Thus, the RN may in 628 determine routing of the message on the basis of information on networks connected to RNs, and route the message within the CCG towards the RN connected to the network identified from the message.

In 632, it may be determined whether the message 630 routed from the UE via the CCG to the deNB 604 should be served by the network of operator B or whether the message should be routed forward for delivery to another operator's network. The determination in 632 may be performed on the basis of the subscription of the UE. If the network of the operator B is the home network of the UE or if roaming on the network of the operator B is allowed to the UE, the UE may be served by the deNB 604 and the message 630 does not need to be routed to another network.

If, in 630, it is determined that the network of the operator B should not serve the UE, the network may determine in 632 which network should serve the UE and forward the message towards the correct network.

In an embodiment, in 632, routing instructions may be generated on the basis of the decision to route the message 630 or to serve, i.e. not route. These instructions 636 may be shared among the one or more RNs in the CCG, so that traffic may be correctly routed between the UE and its subscribed network via the CCG. The routing instructions may identify the UE, the RN connecting to the UE, and the network serving the UE, for example.

In an embodiment, the routing instructions generated in 632 may be transmitted to one or more other networks connected to the CCG, as is illustrated in 634.

After the routing instructions for the traffic of the UE have been shared, the traffic between the UE and the network of the UE may be routed via the CCG, as illustrated by messages 638.

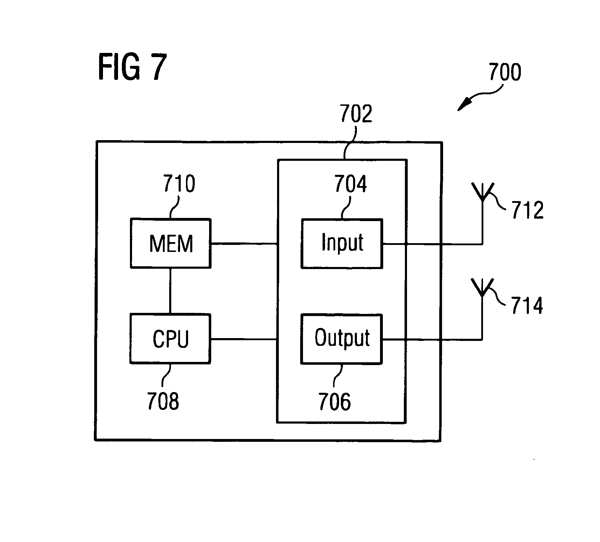

The block diagram in Figure 7 shows a reference hardware configuration of an apparatus 700 according to an exemplary embodiment. The apparatus may be used for communications for example in the communications system of Figure 1. The apparatus may be for example the eNB, UE or RN in Figure 1. The apparatus 700 in Figure 7 may comprise a transceiver unit 702 for radio communications. The transceiver may comprise a transmitter 706 and a receiver 704 that may be electrically interconnected with a processing unit 708. The apparatus may also comprise one or more antennas 712 and 714. The transmitter 706 may receive a bit stream from the processing unit 708, and convert it to a radio frequency signal for transmission by an antenna 714. Correspondingly, the radio frequency signals received by the antenna 712 may be led to the receiver 704, which may convert the radio frequency signal into a bitstream that may be forwarded for further processing to the processing unit 708.

The processing unit 708 is a central element that essentially comprises an arithmetic logic unit, a number of special registers and control circuits. For example, the functions implemented by the processing unit 708 in reception of transmissions typically comprise: channel estimation, equalisation, detection, decoding, reordering, de-interleaving, descrambling, channel de-multiplexing, and burst de-formatting. A memory unit 710, a data medium where computer-readable data or programs, or user data can be stored, is connected to the processing unit 708. The memory unit 710 may typically comprise memory units that allow for both reading and writing (RAM) and memory whose contents can only be read (ROM).

The processing unit 708, the memory unit 710, and the transceiver unit 702 may be electrically interconnected to provide means for performing systematic execution of operations on the received and/or stored data according to the predefined, essentially programmed processes of the apparatus. In solutions according to an exemplary embodiment, the operations comprise functions for connecting to a group of interconnected wireless relay nodes comprising a first set connected to a first network over a first wireless connection and a second set connected to a second network over a second wireless connection, configuring at least one of a first and a second sets of wireless relay nodes with resources to both a first and a second network, and providing wireless access to user equipment of the second network via said first set of wireless relay nodes to the interconnected second set of wireless relay nodes and further over the second wireless connection to the second network. These operations are described in more detail in Figures 2, 3 and 6.

It should be noted that only elements necessary for describing an exemplary embodiment are illustrated in Figure 7. To a person skilled in the art, it is clear that an apparatus for receiving a transmission on a communications channel may comprise a plurality of further elements and functionalities not explicitly illustrated herein. In addition, the blocks illustrate logical or functional units that may be implemented in or with one or more physical units, irrespective of whether they are illustrated as one or more blocks in Figure 7.

The steps/points, signaling messages and related functions described above in Figures 2, 3 and 6 are in no absolute chronological order, and some of the steps/points may be performed simultaneously or in an order differing from the given one. Other functions can also be executed between the steps/points or within the steps/points and other signaling messages sent between the illustrated messages. Some of the steps/points or part of the steps/points can also be left out or replaced by a corresponding step/point or part of the step/point. The eNB and RN operations illustrate procedures that may be implemented in one or more physical or logical entities. The signaling messages are only exemplary and may even comprise several separate messages for transmitting the same information. In addition, the messages may also contain other information.

The present invention is applicable to any user terminal, access node, server, RN, base station, corresponding component, and/or to any communication system or any combination of different communication systems that support relaying. The communication system may be a fixed communication system or a wireless communication system or a communication system utilizing both fixed networks and wireless networks. The protocols used, the specifications of access nodes, communication systems, servers and user terminals, especially in wireless communication, develop rapidly. Such development may require extra changes to an embodiment. Therefore, all words and expressions should be interpreted broadly and they are intended to illustrate, not to restrict, the embodiment.

It will be obvious to a person skilled in the art that, as the technology advances, the inventive concept can be implemented in various ways. The invention and its embodiments are not limited to the examples described above but may vary within the scope of the claims.

## Claims

1. A method for a network node (132, 134) comprising:
connecting (204) to a group of interconnected wireless relay nodes (RN#1, RN#2, RN#3, RN#4), the group comprising of a first set of wireless relay nodes (RN#1, RN#3) connected to a first network (104) over a first wireless connection (172, 174) and a second set of wireless relay nodes (RN#2, RN#3, RN#4) connected to a second network (106) over a second wireless connection (176, 178, 180); and
configuring (214, 218) at least one of the first and the second sets of wireless relay nodes with resources for both the first and the second network for providing (216) a user equipment (150 to 170) of the second network with wireless access via said first set of wireless relay nodes to the interconnected (143, 145, 147) second set of wireless relay nodes and further over the second wireless connection to the second network.

2. The method according to claim 1, comprising:
configuring (218) both the first and the second set of wireless relay nodes with resources for both the first and the second network for providing (216) wireless access to a user equipment of the first network via said second set of wireless relay nodes to the interconnected (143, 145, 147) first set of wireless relay nodes and further over the first wireless connection to the first network.

3. The method according to claim 1 or 2, comprising:
allocating resources of both the first and the second network to the at least one of the first and the second sets of wireless relay nodes;
wherein the resources comprise resources of at least one of a first and a second operator, and said resources are configured (218) as resources shared among the first and the second networks and/or
wherein the resources comprise resources of the at least one of the first and the second operators, and said resources are configured (214) as resources dedicated to the said one of the first and the second networks; and/or
wherein the resources comprise one or more from a group comprising: frequency, frequency band, code, time slot, antenna, an identity of RN, identity of a group of RNs, network identifier, cell identifier and combination of two or more of the previous.

4. The method according to any one of claims 1 to 3, wherein the group of interconnected wireless relay nodes comprises a co-operative group of interconnected relay nodes sharing information comprising one or more of: allocated resources, channel condition, connected networks, connected user equipment, number of user equipment per operator, capability information;
the method further comprising:
receiving (206) said information from at least one relay node of the group; and
selecting (208, 210), on the basis of the received information, a wireless relay node to provide accessfor the user equipment of the first and the second network to a network via the sets of radio relay nodes of the group of interconnected wireless relay nodes.

5. A method for a relay node (RN#1) wherein the relay node is part of a first set of wireless relay nodes (RN#1, RN#3) of a group of interconnected wireless relay nodes (RN#1, RN#2, RN#3, RN#4), said group comprising of the first set of wireless relay nodes connected to a first network (104) over a first wireless connection (172, 174) and a second set of wireless relay nodes (RN#2, RN#3, RN#4) connected to a second network (106) over a second wireless connection (176, 178, 180);
the method comprising of
connecting (304) to a network node; and
receiving (308) configuration data from the network node; and
configuring (310) the relay node with resources for both the first and the second network; and
providing access of a user equipment to the second network via the relay node (312)and the interconnected second set of wireless relay nodes.

6. The method according to claim 5, comprising:
transmitting (622) a plurality of identifiers comprising identifiers of both the first and the second network to the user equipment; and
receiving (626) a message from the user equipment, said message indicating a network selected from the plurality of identifiers transmitted to the user equipment; and
routing (628) the message to the selected network.

7. A network node (132, 134) comprising:
means (702) for connecting to a group of interconnected wireless relay nodes (RN#1, RN#2, RN#3, RN#4), the group comprising of a first set of wireless relay nodes (RN#1, RN#3) connected to a first network (104) over a first wireless connection (172, 174) and a second set of wireless relay nodes (RN#2, RN#3, RN#4) connected to a second network (106) over a second wireless connection (176, 178, 180); and
means (708) for configuring at least one of the first and the second sets of wireless relay nodes with resources for both the first and the second network for providing wireless access to a user equipment (150 to 170) of the second network via said first set of wireless relay nodes to the interconnected second set of wireless relay nodes and further over the second wireless connection to the second network.

8. The network node according to claim 7, further comprising
means (708) for configuring both the first and the second set of wireless relay nodes with resources for both the first and the second network for providing wireless access to a user equipment of the first network via said second set of wireless relay nodes to the interconnected first set of wireless relay nodes and further over the first wireless connection to the first network.

9. The network node according to claim 7 or 8, wherein the group of interconnected wireless relay nodes comprises a third set of wireless relay nodes connected to a third network over a third wireless connection, and wireless access to each network is provided via said sets of wireless relay nodes over the wireless connection to said each network.

10. The network node according to any one of claims 7 to 9, further comprising:
means (708) for allocating resources of both the first and the second network to the at least one of the first and the second sets of wireless relay nodes;
wherein the resources comprise resources of at least one of a first and the second operator and said resources are configured as resources shared among the first and the second networks, and/or
wherein the resources comprise resources of the at least one of the first and the second operators and said resources are configured as resources dedicated to said one of the first and the second networks, and/or
wherein the resources comprise one or more from a group comprising: frequency, frequency band, code, time slot, antenna, an identity of RN, identity of a group of RNs, network identifier, cell identifier and combination of two or more of the previous.

11. The network node according to any one of claims 7 to 10, wherein the group of interconnected wireless relay nodes comprises a co-operative group of interconnected relay nodes sharing information comprising one or more of: allocated resources, channel condition of a connection, connected networks, connected user equipment, number of user equipment per operator, capability information;
the network node further comprising:
means (704) for receiving said information from at least one relay node of the group; and
means (708) for selecting, on the basis of the received information, a wireless relay node to provide access for the user equipment of the first and the second network to a network via the sets of radio relay nodes of the group of interconnected wireless relay nodes.

12. The network node according to any one of claims 7 to 11, wherein the network node comprises at least one from a group comprising: base station, relay node, module, network controller.

13. A relay node (RN#1) wherein the relay node is part of a first set of wireless relay nodes (RN#1, RN3) of a group of interconnected wireless relay nodes (RN#1, RN#2, RN3, RN#4), said group comprising of the first set of wireless relay nodes connected to a first network (104) over a first wireless connection (172, 174) and a second set of wireless relay nodes (RN#2, RN#3, RN#4)connected to a second network (106) over a second wireless connection (176, 178, 180);
the relay node comprising of
means for connecting (702) to a network node; and
means for receiving (704) configuration data from the network node; and means for configuring (708, 7010) the relay node with resources for both the first and the second network; and
means (708) for providing access (704, 706) of a user equipment to the second network via the relay node (312) and the interconnected second set of wireless relay nodes.

14. The relay node according to claim 12, further comprising
means for transmitting (706, 622) a plurality of identifiers comprising identifiers of both the first and the second network to the user equipment; and
means for receiving (704, 626) a message from the user equipment, said message indicating a network selected from the plurality of identifiers transmitted to the user equipment; and
means for routing (708, 628) the message to the selected network.

15. A computer program comprising program code means adapted to perform any one of the steps of claims 1 to 6 when the program is run on a computer.

## Patentansprüche

1. Verfahren für einen Netzknoten (132, 134), aufweisend:
Verbinden (204) mit einer Gruppe von zusammengeschalteten drahtlosen Relaisknoten (RN#1, RN#2, RN#3, RN#4), wobei die Gruppe einen ersten Satz von drahtlosen Relaisknoten (RN#1, RN#3), die über eine erste drahtlose Verbindung (172, 174) mit einem ersten Netz (104) verbunden sind, und einen zweiten Satz von drahtlosen Relaisknoten (RN#2, RN#3, RN#4) aufweist, die über eine zweite drahtlose Verbindung (176, 178, 180) mit einem zweiten Netz (106) verbunden sind; und
Konfigurieren (214, 218) mindestens eines von den ersten und den zweiten Sätzen von drahtlosen Relaisknoten mit Ressourcen für sowohl das erste als auch das zweite Netz zum Bereitstellen (216) einer Benutzereinrichtung (150 bis 170) des zweiten Netzes mit drahtlosem Zugang durch den ersten Satz von drahtlosen Relaisknoten zu dem zusammengeschalteten (143, 145, 147) zweiten Satz von drahtlosen Relaisknoten und ferner über die zweite drahtlose Verbindung zum zweiten Netz.

2. Verfahren nach Anspruch 1, aufweisend:
Konfigurieren (218) sowohl des ersten als auch des zweiten Satzes von drahtlosen Relaisknoten mit Ressourcen sowohl für das erste als auch das zweite Netz zum Bereitstellen (216) von drahtlosem Zugang für eine Benutzereinrichtung des ersten Netzes durch den zweiten Satz von drahtlosen Relaisknoten zu dem zusammengeschalteten (143, 145, 147) ersten Satz von drahtlosen Relaisknoten und ferner über die erste drahtlose Verbindung zum ersten Netz.

3. Verfahren nach Anspruch 1 oder 2, aufweisend:
Zuordnen von Ressourcen sowohl des ersten als auch des zweiten Netzes zu dem mindestens einen von den ersten und den zweiten Sätzen von drahtlosen Relaisknoten;
wobei die Ressourcen Ressourcen mindestens eines von einem ersten und einem zweiten Betreiber aufweisen, und die Ressourcen als Ressourcen konfiguriert sind (218), die von den ersten und den zweiten Netzen gemeinsam genutzt werden, und/oder
wobei die Ressourcen Ressourcen des mindestens einen von den ersten und den zweiten Betreibern aufweisen, und die Ressourcen als Ressourcen konfiguriert sind (214), die dem einen von den ersten und den zweiten Netzen fest zugeordnet sind, und/oder
wobei die Ressourcen eines oder mehreres aus einer Gruppe aufweisen, die aufweist: Frequenz, Frequenzband, Code, Zeitschlitz, Antenne, Kennung von RN, Kennung einer Gruppe von RNs, Netzkennung, Zellkennung und eine Kombination von zwei oder mehreren der Vorgenannten.

4. Verfahren nach einem der Ansprüche 1 bis 3, wobei die Gruppe von zusammengeschalteten drahtlosen Relaisknoten eine kooperative Gruppe von zusammengeschalteten Relaisknoten aufweist, welche Informationen gemeinsam nutzen, die eines oder mehreres aufweisen von: zugeordneten Ressourcen, Kanalzustand, verbundenen Netzen, verbundenen Benutzereinrichtungen, Anzahl von Benutzereinrichtungen pro Betreiber, Leistungsfähigkeitsinformationen;
wobei das Verfahren ferner aufweist:
Empfangen (206) der Informationen von mindestens einem Relaisknoten der Gruppe; und
Auswählen (208, 210) auf der Basis der empfangenen Informationen eines drahtlosen Relaisknotens zum Bereitstellen von Zugang für die Benutzereinrichtung des ersten und des zweiten Netzes zu einem Netz durch die Sätze von Funk-Relaisknoten der Gruppe von zusammengeschalteten drahtlosen Relaisknoten.

5. Verfahren für einen Relaisknoten (RN#1), wobei der Relaisknoten zu einem ersten Satz von drahtlosen Relaisknoten (RN#1, RN#3) einer Gruppe von zusammengeschalteten drahtlosen Relaisknoten (RN#1, RN#2, RN#3, RN#4) gehört, wobei die Gruppe den ersten Satz von drahtlosen Relaisknoten, die über eine erste drahtlose Verbindung (172, 174) mit einem ersten Netz (104) verbunden sind, und einen zweiten Satz von drahtlosen Relaisknoten (RN#2, RN#3, RN#4) aufweist, die über eine zweite drahtlose Verbindung (176, 178, 180) mit einem zweiten Netz (106) verbunden sind; und
wobei das Verfahren aufweist:
Verbinden (304) mit einem Netzknoten; und
Empfangen (308) von Konfigurationsdaten vom Netzknoten; und
Konfigurieren (310) des Relaisknotens mit Ressourcen sowohl für das erste als auch das zweite Netz; und
Bereitstellen von Zugang einer Benutzereinrichtung zum zweiten Netz durch den Relaisknoten (312) und den zusammengeschalteten zweiten Satz von drahtlosen Relaisknoten.

6. Verfahren nach Anspruch 5, aufweisend:
Senden (622) von mehreren Kennungen, welche Kennungen sowohl des ersten als auch des zweiten Netzes aufweisen, an die Benutzereinrichtung; und
Empfangen (626) einer Nachricht von der Benutzereinrichtung, wobei die Nachricht ein Netz anzeigt, das aus den mehreren Kennungen ausgewählt ist, die an die Benutzereinrichtung gesendet wurden; und
Weiterleiten (628) der Nachricht an das ausgewählte Netz.

7. Netzknoten (132, 134), aufweisend:
Mittel (702) zum Verbinden mit einer Gruppe von zusammengeschalteten drahtlosen Relaisknoten (RN#1, RN#2, RN#3, RN#4), wobei die Gruppe einen ersten Satz von drahtlosen Relaisknoten (RN#1, RN#3), die über eine erste drahtlose Verbindung (172, 174) mit einem ersten Netz (104) verbunden sind, und einen zweiten Satz von drahtlosen Relaisknoten (RN#2, RN#3, RN#4) aufweist, die über eine zweite drahtlose Verbindung (176, 178, 180) mit einem zweiten Netz (106) verbunden sind; und
Mittel (708) zum Konfigurieren mindestens eines von den ersten und den zweiten Sätzen von drahtlosen Relaisknoten mit Ressourcen sowohl für das erste als auch das zweite Netz zum Bereitstellen von drahtlosem Zugang für eine Benutzereinrichtung (150 bis 170) des zweiten Netzes durch den ersten Satz von drahtlosen Relaisknoten zu dem zusammengeschalteten zweiten Satz von drahtlosen Relaisknoten und ferner über die zweite drahtlose Verbindung zum zweiten Netz.

8. Netzknoten nach Anspruch 7, ferner aufweisend:
Mittel (708) zum Konfigurieren sowohl des ersten als auch des zweiten Satzes von drahtlosen Relaisknoten mit Ressourcen sowohl für das erste als auch das zweite Netz zum Bereitstellen von drahtlosem Zugang für eine Benutzereinrichtung des ersten Netzes durch den zweiten Satz von drahtlosen Relaisknoten zu dem zusammengeschalteten ersten Satz von drahtlosen Relaisknoten und ferner über die erste drahtlose Verbindung zum ersten Netz.

9. Netzknoten nach Anspruch 7 oder 8, wobei die Gruppe von zusammengeschalteten drahtlosen Relaisknoten einen dritten Satz von drahtlosen Relaisknoten aufweist, die über eine dritte drahtlose Verbindung mit einem dritten Netz verbunden sind, und drahtloser Zugang zu jedem Netz durch die Sätze von drahtlosen Relaisknoten über die drahtlose Verbindung zu jedem Netz bereitgestellt wird.

10. Netzknoten nach einem der Ansprüche 7 bis 9, ferner aufweisend:
Mittel (708) zum Zuordnen von Ressourcen sowohl des ersten als auch des zweiten Netzes zu dem mindestens einen von den ersten und den zweiten Sätzen von drahtlosen Relaisknoten;
wobei die Ressourcen Ressourcen mindestens eines von einem ersten und dem zweiten Betreiber aufweisen, und die Ressourcen als Ressourcen konfiguriert sind, die von den ersten und den zweiten Netzen gemeinsam genutzt werden, und/oder
wobei die Ressourcen Ressourcen des mindestens einen von den ersten und den zweiten Betreibern aufweisen, und die Ressourcen als Ressourcen konfiguriert sind, die dem einen von den ersten und den zweiten Netzen fest zugeordnet sind, und/oder
wobei die Ressourcen eines oder mehreres aus einer Gruppe aufweisen, die aufweist: Frequenz, Frequenzband, Code, Zeitschlitz, Antenne, Kennung von RN, Kennung einer Gruppe von RNs, Netzkennung, Zellkennung und eine Kombination von zwei oder mehreren der Vorgenannten.

11. Netzknoten nach einem der Ansprüche 7 bis 10, wobei die Gruppe von zusammengeschalteten drahtlosen Relaisknoten eine kooperative Gruppe von zusammengeschalteten Relaisknoten aufweist, welche Informationen gemeinsam nutzen, die eines oder mehreres aufweisen von: zugeordneten Ressourcen, Kanalzustand einer Verbindung, verbundenen Netzen, verbundenen Benutzereinrichtungen, Anzahl von Benutzereinrichtungen pro Betreiber, Leistungsfähigkeitsinformationen;
wobei der Netzknoten ferner aufweist:
Mittel (704) zum Empfangen der Informationen von mindestens einem Relaisknoten der Gruppe; und
Mittel (708) zum Auswählen auf der Basis der empfangenen Informationen eines drahtlosen Relaisknotens zum Bereitstellen von Zugang für die Benutzereinrichtung des ersten und des zweiten Netzes zu einem Netz durch die Sätze von Funk-Relaisknoten der Gruppe von zusammengeschalteten drahtlosen Relaisknoten.

12. Netzknoten nach einem der Ansprüche 7 bis 11, wobei der Netzknoten mindestens eines aus einer Gruppe aufweist, die aufweist: Basisstation, Relaisknoten, Modul, Netzsteuerung.

13. Relaisknoten (RN#1), wobei der Relaisknoten zu einem ersten Satz von drahtlosen Relaisknoten (RN#1, RN#3) einer Gruppe von zusammengeschalteten drahtlosen Relaisknoten (RN#1, RN#2, RN#3, RN#4) gehört, wobei die Gruppe den ersten Satz von drahtlosen Relaisknoten, die über eine erste drahtlose Verbindung (172, 174) mit einem ersten Netz (104) verbunden sind, und einen zweiten Satz von drahtlosen Relaisknoten (RN#2, RN#3, RN#4) aufweist, die über eine zweite drahtlose Verbindung (176, 178, 180) mit einem zweiten Netz (106) verbunden sind; wobei der Relaisknoten aufweist:
Mittel zum Verbinden (702) mit einem Netzknoten; und
Mittel zum Empfangen (704) von Konfigurationsdaten vom Netzknoten; und
Mittel zum Konfigurieren (708, 710) des Relaisknotens mit Ressourcen sowohl für das erste als auch das zweite Netz; und
Mittel (708) zum Bereitstellen von Zugang (704, 706) einer Benutzereinrichtung zum zweiten Netz durch den Relaisknoten (312) und den zusammengeschalteten zweiten Satz von drahtlosen Relaisknoten.

14. Relaisknoten nach Anspruch 12, ferner aufweisend:
Mittel zum Senden (706, 622) von mehreren Kennungen, welche Kennungen sowohl des ersten als auch des zweiten Netzes aufweisen, an die Benutzereinrichtung; und
Mittel zum Empfangen (704, 626) einer Nachricht von der Benutzereinrichtung, wobei die Nachricht ein Netz anzeigt, das aus den mehreren Kennungen ausgewählt ist, die an die Benutzereinrichtung gesendet wurden; und
Mittel zum Weiterleiten (708, 628) der Nachricht an das ausgewählte Netz.

15. Computerprogramm, aufweisend Programmcodemittel, die so ausgelegt sind, dass sie einen der Schritte nach Anspruch 1 bis 6 ausführen, wenn das Programm auf einem Computer ausgeführt wird.

## Revendications

1. Un procédé destiné à un noeud de réseau (132, 134) comprenant :
le raccordement (204) à un groupe de noeuds relais sans fil interraccordés (RN#1, RN#2, RN#3, RN#4), le groupe se composant d'un premier ensemble de noeuds relais sans fil (RN#1, RN#3) raccordés à un premier réseau (104) par l'intermédiaire d'une première connexion sans fil (172, 174) et un deuxième ensemble de noeuds relais sans fil (RN#2, RN#3, RN#4) raccordés à un deuxième réseau (106) par l'intermédiaire d'une deuxième connexion sans fil (176, 178, 180), et
la configuration (214, 218) d'au moins un ensemble parmi les premier et deuxième ensembles de noeuds relais sans fil avec des ressources pour à la fois le premier et le deuxième réseau de façon à équiper (216) un équipement utilisateur (150 à 170) du deuxième réseau d'un accès sans fil par l'intermédiaire dudit premier ensemble de noeuds relais sans fil au deuxième ensemble de noeuds relais sans fil interraccordés (143, 145, 147) et ensuite par l'intermédiaire de la deuxième connexion sans fil au deuxième réseau.

2. Le procédé selon la revendication 1, comprenant :
la configuration (218) à la fois du premier et du deuxième ensemble de noeuds relais sans fil avec des ressources pour à la fois le premier et le deuxième réseau de façon à fournir (216) un accès sans fil à un équipement utilisateur du premier réseau par l'intermédiaire du deuxième ensemble de noeuds relais sans fil au premier ensemble de noeuds relais sans fil interraccordés (143, 145, 147) et ensuite par l'intermédiaire de la première connexion sans fil au premier réseau.

3. Le procédé selon la revendication 1 ou 2, comprenant :
l'attribution de ressources à la fois du premier et du deuxième réseau au au moins un ensemble parmi les premier et deuxième ensembles de noeuds relais sans fil,
les ressources comprenant des ressources d'au moins un opérateur parmi un premier et un deuxième opérateur, et lesdites ressources étant configurées (218) sous la forme de ressources partagées entre les premier et deuxième réseaux, et/ou
les ressources comprenant des ressources du au moins un opérateur parmi les premier et deuxième opérateurs, et lesdites ressources étant configurées (214) sous la forme de ressources dédiées audit réseau parmi les premier et deuxième réseaux, et/ou
les ressources comprenant un ou plusieurs éléments d'un groupe comprenant : fréquence, bande de fréquences, code, intervalle temporel, antenne, identité de RN, identité d'un groupe de RN, identifiant de réseau, identifiant de cellule, et une combinaison de deux éléments ou plus parmi les précédents.

4. Le procédé selon l'une quelconque des revendications 1 à 3, dans lequel le groupe de noeuds relais sans fil interraccordés comprend un groupe de noeuds relais interraccordés coopératifs partageant des informations comprenant un ou plusieurs éléments parmi : ressources attribuées, état de canal, réseaux raccordés, équipement utilisateur raccordé, nombre d'équipements utilisateurs par opérateur, informations de capacité,
le procédé comprenant en outre :
la réception (206) desdites informations à partir d'au moins un noeud relais du groupe, et
la sélection (208, 210), en fonction des informations reçues, d'un noeud relais sans fil de façon à fournir un accès à l'équipement utilisateur du premier et du deuxième réseau à un réseau par l'intermédiaire des ensembles de noeuds relais radio du groupe de noeuds relais sans fil interraccordés.

5. Un procédé destiné à un noeud relais (RN#1) dans lequel le noeud relais fait partie d'un premier ensemble de noeuds relais sans fil (RN#1, RN#3) d'un groupe de noeuds relais sans fil interraccordés (RN#1, RN#2, RN#3, RN#4), ledit groupe se composant du premier ensemble de noeuds relais sans fil raccordés à un premier réseau (104) par l'intermédiaire d'une première connexion sans fil (172, 174) et d'un deuxième ensemble de noeuds relais sans fil (RN#2, RN#3, RN#4) raccordés à un deuxième réseau (106) par l'intermédiaire d'une deuxième connexion sans fil (176, 178, 180),
le procédé comprenant
le raccordement (304) à un noeud de réseau, et
la réception (308) de données de configuration à partir du noeud de réseau, et
la configuration (310) du noeud relais avec des ressources pour à la fois le premier et le deuxième réseau, et
la fourniture d'un accès pour un équipement utilisateur au deuxième réseau par l'intermédiaire du noeud relais (312) et du deuxième ensemble de noeuds relais sans fil interraccordés.

6. Le procédé selon la revendication 5, comprenant :
la transmission (622) d'une pluralité d'identifiants comprenant des identifiants à la fois du premier et du deuxième réseau à l'équipement utilisateur, et
la réception (626) d'un message provenant de l'équipement utilisateur, ledit message indiquant un réseau sélectionné parmi la pluralité d'identifiants transmis à l'équipement utilisateur, et
l'acheminement (628) du message au réseau sélectionné.

7. Un noeud de réseau (132, 134) comprenant :
un moyen (702) de raccordement à un groupe de noeuds relais sans fil interraccordés (RN#1, RN#2, RN#3, RN#4), le groupe se composant d'un premier ensemble de noeuds relais sans fil (RN#1, RN#3) raccordés à un premier réseau (104) par l'intermédiaire d'une première connexion sans fil (172, 174) et d'un deuxième ensemble de noeuds relais sans fil (RN#2, RN#3, RN#4) raccordés à un deuxième réseau (106) par l'intermédiaire d'une deuxième connexion sans fil (176, 178, 180), et
un moyen (708) de configuration d'au moins un ensemble parmi les premier et deuxième ensembles de noeuds relais sans fil avec des ressources pour à la fois le premier et le deuxième réseau pour la fourniture d'un accès sans fil à un équipement utilisateur (150 à 170) du deuxième réseau par l'intermédiaire dudit premier ensemble de noeuds relais sans fil au deuxième ensemble de noeuds relais sans fil interraccordés, et ensuite par l'intermédiaire de la deuxième connexion sans fil au deuxième réseau.

8. Le noeud de réseau selon la revendication 7, comprenant en outre
un moyen (708) de configuration à la fois du premier et du deuxième ensemble de noeuds relais sans fil avec des ressources pour à la fois le premier et le deuxième réseau pour la fourniture d'un accès sans fil à un équipement utilisateur du premier réseau par l'intermédiaire du deuxième ensemble de noeuds relais sans fil au premier ensemble de noeuds relais sans fil interraccordés, et ensuite par l'intermédiaire de la première connexion sans fil au premier réseau.

9. Le noeud de réseau selon la revendication 7 ou 8, dans lequel le groupe de noeuds relais sans fil interraccordés comprend un troisième ensemble de noeuds relais sans fil raccordés à un troisième réseau par l'intermédiaire d'une troisième connexion sans fil, et un accès sans fil à chaque réseau est fourni par l'intermédiaire desdits ensembles de noeuds relais sans fil par l'intermédiaire de la connexion sans fil à chacun desdits réseaux.

10. Le noeud de réseau selon l'une quelconque des revendications 7 à 9, comprenant en outre :
un moyen (708) d'attribution de ressources à la fois du premier et du deuxième réseau au au moins un ensemble parmi les premier et deuxième ensembles de noeuds relais sans fil,
les ressources comprenant des ressources d'au moins un opérateur parmi les premier et deuxième opérateurs et lesdites ressources étant configurées sous la forme de ressources partagées entre les premier et deuxième réseaux, et/ou
les ressources comprenant des ressources du au moins un opérateur parmi les premier et deuxième opérateurs et lesdites ressources étant configurées sous la forme de ressources dédiées audit réseau parmi les premier et deuxième réseaux, et/ou
les ressources comprenant un ou plusieurs éléments d'un groupe comprenant : fréquence, bande de fréquences, code, intervalle temporel, antenne, identité de RN, identité d'un groupe de RN, identifiant de réseau, identifiant de cellule, et une combinaison de deux éléments ou plus parmi les précédents.

11. Le noeud de réseau selon l'une quelconque des revendications 7 à 10, dans lequel le groupe de noeuds relais sans fil interraccordés comprend un groupe de noeuds relais interraccordés coopératifs partageant des informations comprenant un ou plusieurs éléments parmi : ressources attribuées, état de canal d'une connexion, réseaux raccordés, équipement utilisateur raccordé, nombre d'équipements utilisateurs par opérateur, informations de capacité,
le noeud de réseau comprenant en outre :
un moyen (704) de réception desdites informations à partir d'au moins un noeud relais du groupe, et
un moyen (708) de sélection, en fonction des informations reçues, d'un noeud relais sans fil de façon à fournir un accès à l'équipement utilisateur du premier et du deuxième réseau à un réseau par l'intermédiaire des ensembles de noeuds relais radio du groupe de noeuds relais sans fil interraccordés.

12. Le noeud de réseau selon l'une quelconque des revendications 7 à 11, dans lequel le noeud de réseau comprend au moins un élément d'un groupe comprenant : station de base, noeud relais, module, dispositif de commande de réseau.

13. Un noeud relais (RN#1) dans lequel le noeud relais fait partie d'un premier ensemble de noeuds relais sans fil (RN#1, RN3) d'un groupe de noeuds relais sans fil interraccordés (RN#1, RN#2, RN3, RN#4), ledit groupe se composant du premier ensemble de noeuds relais sans fil raccordés à un premier réseau (104) par l'intermédiaire d'une première connexion sans fil (172, 174) et d'un deuxième ensemble de noeuds relais sans fil (RN#2, RN#3, RN#4) raccordés à un deuxième réseau (106) par l'intermédiaire d'une deuxième connexion sans fil (176, 178, 180),
le noeud relais comprenant
un moyen de raccordement (702) à un noeud de réseau, et
un moyen de réception (704) de données de configuration à partir du noeud de réseau, et un moyen de configuration (708, 710) du noeud relais avec des ressources pour à la fois le premier et le deuxième réseau, et
un moyen (708) de fourniture d'un accès (704, 706) pour un équipement utilisateur au deuxième réseau par l'intermédiaire du noeud relais (312) et du deuxième ensemble de noeuds relais sans fil interraccordés.

14. Le noeud relais selon la revendication 12, comprenant en outre
un moyen de transmission (706, 622) d'une pluralité d'identifiants comprenant des identifiants à la fois du premier et du deuxième réseau à l'équipement utilisateur, et
un moyen de réception (704, 626) d'un message provenant de l'équipement utilisateur, ledit message indiquant un réseau sélectionné parmi la pluralité d'identifiants transmis à l'équipement utilisateur, et
un moyen d'acheminement (708, 628) du message au réseau sélectionné.

15. Un programme informatique contenant un moyen de code de programme adapté de façon à exécuter l'une quelconque des étapes des revendications 1 à 6 lorsque le programme est exécuté sur un ordinateur.
